# EUROPÄISCHE PATENTSCHRIFT

(11) **EP 3 331 765 B1**
(45) Veröffentlichungstag und Bekanntmachung des Hinweises auf die Patenterteilung: **02.10.2019**
(21) Anmeldenummer: 16750436.4
(22) Anmeldetag: 08.08.2016
(51) Int. Cl.: B65B 31/02, B65B 51/14, B65B 47/02, B65B 47/10, B65B 25/06, B65B 57/18, B65B 57/00, B65B 59/00, B29C 65/00, B65B 9/04, B29C 65/18, B29C 51/46, B65B 51/10

(54) **VERPACKUNGSMASCHINE MIT FEUCHTIGKEITSSENSOR**
PACKAGING MACHINE HAVING MOISTURE SENSOR
MACHINE D'EMBALLAGE À CAPTEUR D'HUMIDITE

(30) Priorität: 06.08.2015 DE 102015214992
(43) Veröffentlichungstag der Anmeldung: 13.06.2018
(73) Patentinhaber: MULTIVAC Sepp Haggenmüller SE & Co. KG, 87787 Wolfertschwenden (DE)
(72) Erfinder: EHRMANN, Elmar, 87730 Bad Grönenbach (DE); BOTZENHARDT, Claus, 87439 Kempten (DE); HOLDERIED, Thomas, 87463 Dietmannsried (DE); FELCH, Florian, 87471 Durach (DE); ENDERLE, Tobias, 87730 Bad Grönenbach (DE)
(74) Vertreter: Grünecker Patent- und Rechtsanwälte PartG mbB
(86) Internationale Anmeldenummer: PCT/EP2016/068898
(87) Internationale Veröffentlichungsnummer: WO 2017/021557

(56) Entgegenhaltungen:
- EP-A1- 1 935 787
- CN-U- 203 845 103
- US-A1- 2005 039 420
- US-A1- 2014 109 511

## Beschreibung

Die vorliegende Erfindung betrifft eine selbststeuernde Verpackungsmaschine gemäß dem Anspruch 1. Weiterhin bezieht sich die vorliegende Erfindung auf ein Verfahren einer selbststeuernden Verpackungsmaschine gemäß dem unabhängigen Anspruch 13.

Bei bekannten Verpackungsmaschinen setzt sich der Herstellungsprozess aus einer Vielzahl von Einzelprozessen, wie z.B. Kammer schließen, Heizen, Formen, Evakuieren, Begasen, Siegeln, Kammer öffnen und Sicherheitszeiten, um Kammern ausreichend be- oder entlüften zu können, zusammen.

Die Einzelprozesse werden dabei zeitgesteuert, wobei die Einzelprozesse nacheinander, gegebenenfalls zeitweise überlappend oder durch Sicherheitszeitintervalle voneinander getrennt ablaufen. Die jeweiligen Prozesszeiten sind insbesondere von einem Kammervolumen, Folienarten, Bewegungsabläufen und Schaltzeiten von Ventilen der Verpackungsmaschine abhängig und müssen deshalb von den Maschinenbedienern für jede Maschinenausstattung sowie für jedes herzustellende Produkt aufwändig an der Bedienkonsole der Verpackungsmaschine voreingestellt werden.

Das Einstellen der jeweiligen Prozesszeiten der Verpackungsmaschine sowie die Abstimmung der jeweiligen Prozesszeiten aufeinander erfordert ein sehr großes Wissen über die einzelnen Prozesse vom Maschinenbediener, wobei es selbst bei sehr routinierten Maschinenbedienern vorkommt, dass mehrere Probeabläufe für die Verpackungsmaschine nötig sind, um die jeweiligen Prozesszeiten reibungslos aufeinander abgestimmt eingestellt zu bekommen.

Oftmals kommt es jedoch bei der Einstellung von Prozesszeiten der Verpackungsmaschine zu zeitlichen Verzögerungen, infolgedessen die Leistung der Verpackungsmaschine erheblich verringert wird.

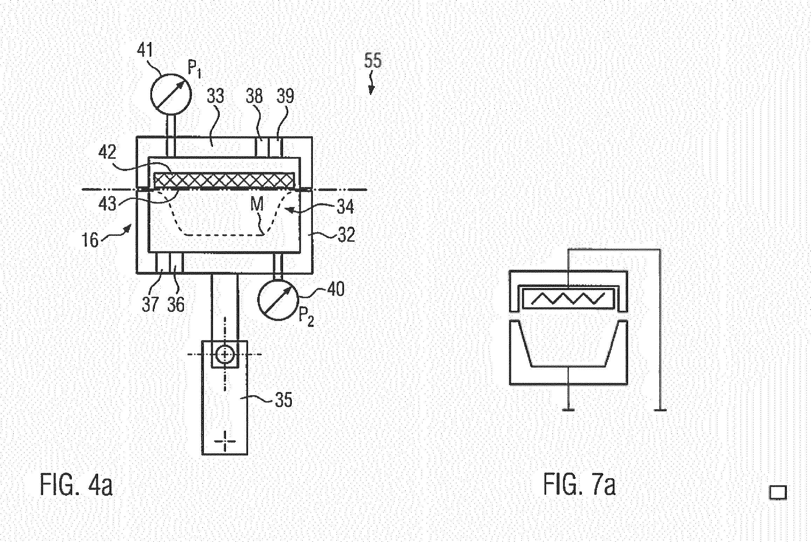

Eine bekannte Formstation zeigt Figur 7a. Diese umfasst ein Oberteil sowie ein Unterteil, welches mittels eines Hubwerks höhenverstellbar ist. Zwischen dem Oberteil und dem Unterteil ist in einer Formkammer eine Heizplatte vorgesehen, die zum Erwärmen eines zu verformenden Folienabschnitts dient. Weiter sind Im Oberteil und im Unterteil Druck- und Belüftungsventile vorgesehen, um einerseits den Folienabschnitt zunächst gegen die Heizplatte zu drücken und anderseits ein Druckformen einer Verpackungsmulde M zu ermöglichen. Diese Prozesse sind zeitgesteuert gemäß einem voreingestellten Zeitplan.

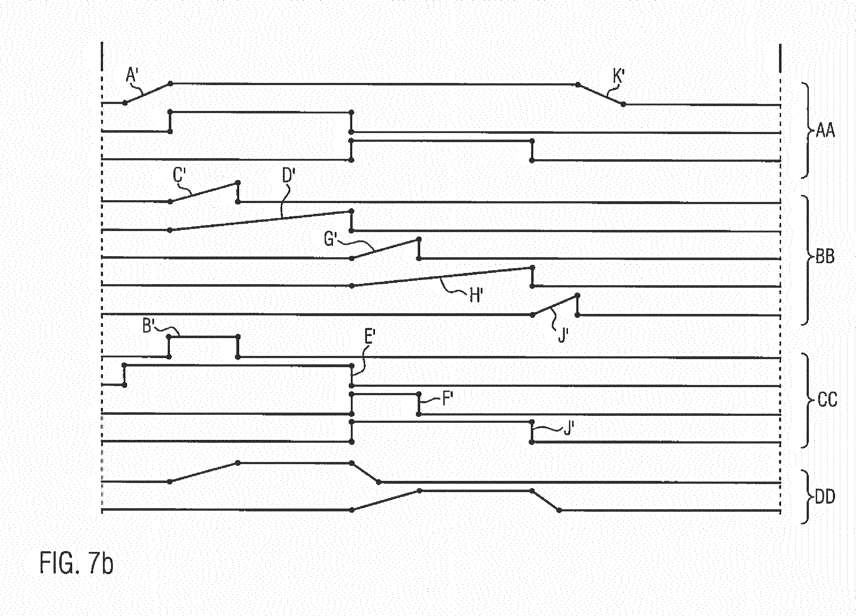

Die zeitgesteuerte Ventilschaltung wird in der Figur 7b verdeutlicht. Im Abschnitt AA sind die Hauptprozesse Hubwerk Öffnen/Schließen, Heizen und Formen abgebildet. Darunter im Abschnitt BB werden voreingestellte Prozesszeiten dargestellt, die durch den Bediener in der Verpackungsmaschine eingestellt werden. Im Abschnitt CC werden die Belüftungs- und Druckventilstellungen für das Oberteil und das Unterteil der Formstation gezeigt. Im Abschnitt DD werden die jeweiligen Druckverläufe in dem Oberteil und dem Unterteil angezeigt.

Nachdem die Formstation geschlossen wurde (Schritt A'), wird Druck im Unterteil erzeugt (Schritt B'). Der Druckaufbau ist zeitgesteuert (Schritt C') und unterbricht bzw. endet, sobald die vorbestimmte Zeit abgelaufen ist. Ebenso läuft eine voreingestellte Heizzeit der Heizplatte ab (Schritt D'). Nach Ablauf der Heizzeit öffnet das Belüftungsventil im Unterteil (Schritt E') und es wird Druck im Oberteil aufgebaut, um den erhitzten Folienabschnitt zu formen (Schritt F'). Der Druckaufbau sowie eine zum Formen voreingestellte Stabilisierungszeit laufen zeitgesteuert ab (Schritt G' und H'). Sobald die Stabilisierungszeit abgelaufen ist, öffnet die obere Belüftung (Schritt I'). Jetzt läuft noch eine voreingestellte Sicherheitszeit am Ende des Formprozesses ab (Schritt J'), bevor sich die Formstation öffnet (Schritt K').

Die Prozesse Hubwerk Öffnen/Schließen sind positionsgesteuert und Heizen und Formen sind bei der oberen Formstation zeitgesteuert. Daher muss der Bediener einen Zeitsteuerungsplan für die Formstation in der Steuerung eingeben. Beim Erstellen des Zeitsteuerungsplans tastet sich der Bediener durch mehrere Versuche an ein gewünschtes Verpackungsergebnis heran. Dieses Herantasten erfordert ein hohes Maß an Routine und kann nur von geschultem Personal vollbracht werden.

DE 10 2009 017 638 A1 offenbart eine Verpackungsmaschine, woran Prozesszeiten durch sich verändernde Randbedingungen anpassbar sind. Dabei richten sich die jeweiligen Prozesszeiten insbesondere an die Anzahl der zur Verfügung gestellten, zu verpackender Produkte.

EP 1 316 002 B1 offenbart eine Werkzeugmaschine, deren Betriebsablauf anhand von Zusatzdaten aus einer Datenbank regelbar ist.

DE 10 2012 005 912 A1 offenbart ein Verfahren zur Überprüfung der Verfügbarkeit der in einer Verpackungslinie eingesetzten Komponenten.

DE 10 2006 040 807 A1 offenbart eine Siegelstation für eine Verpackungsmaschine, wobei im Kraftfluss der Siegelstation ein Kraftsensor vorgesehen ist, welcher während des Siegelvorgangs eine Qualitätsüberwachung in Echtzeit ermöglicht.

DE 10 2005 059 312 A1 offenbart eine Verpackungsmaschine mit einer Leseeinheit zum Auslesen maschinenrelevanter Informationen eines in der Verpackungsmaschine eingesetzten Austauschteils.

EP 1 710 074 A1 offenbart eine Verpackungsmaschine mit einem Werkzeug, das einen Sensorchip aufweist. Aus dem Sensorchip ausgelesene Kennwerte des Werkzeugs können zur Einstellung der Verpackungsmaschine verwendet werden.

DE 20 2010 017 361 U1 offenbart ein Verfahren, mittels welchem sich der Herstellungsprozess eines Fleischprodukts nachverfolgen lässt.

WO 00/19278 A1 bezieht sich nicht auf die Verpackungstechnik, sondern offenbart ein Druck- oder Kopiersystem, bei welchem der Verbrauch von Druckerpatronen gesteuert und überwacht wird.

DE 10 2008 024 461 A1 offenbart eine Verpackungsmaschine mit einer Bearbeitungsstationssteuereinheit, die mit einer Zentralsteuereinheit der Verpackungsmaschine verbunden ist.

EP 2 985 233 A1 offenbart ein Gerät zum Herstellen einer Vakuumverpackung, wobei das Gerät mit einem Feuchtigkeitssensor ausgestattet ist, der während eines Evakuierens der Verpackung einen absoluten Feuchtigkeitswert im Inneren der Verpackung bestimmt. Eine in der Verpackung festgestellte Feuchtigkeit verstärkt das Signal des Sensors. Falls das Signal gleich oder größer als ein Schwellenwert ist, bedeutet dies, dass Feuchtigkeit in der Verpackung vorliegt. Ein Mikroprozessor kann dann einen Vakuummotor ausschalten. Problematisch dabei ist, dass das Erfassen der absoluten Feuchtigkeit nicht für alle Produkte eine geeignete Messgröße ist, um einen Abbruch des Evakuierens zu rechtfertigen. Vielmehr gibt es auch Produkte, bei denen das an dem Feuchtigkeitssensor erfasste Signal variiert, weil der tatsächliche Feuchtigkeitswert schwankt, sodass ein Abbruch des Evakuierens nicht immer gerechtfertigt ist. Dieses Phänomen tritt insbesondere bei Produkten auf, deren Inhalt unregelmäßig und/oder inhomogen ist, beispielsweise bei Leberkäse oder Löcherkäse wie Tilsiter. Hinzu kommt, das der absolute Feuchtigkeitswert keine geeignete Messgröße ist, um eine Tendenz des Druckverlaufs in der Verpackung zu ermitteln, worauf basierend festgestellt werden könnte, ob im Verpackungsinnern noch der gewünschte Vakuumdruck trotz Feuchtigkeit erzeugt werden kann oder nicht.

EP 1 935 787 A1 offenbart eine Verpackungsmaschine mit einer Messstation, die insbesondere zum Erfassen einer Gaskonzentration innerhalb ihr zugeführter Verpackungen ausgebildet ist, wobei diesbezügliche Messwerte an eine Kontrolleinheit weitergegeben werden, die damit eine Atmungsrate des Packguts berechnen kann, worauf basierend eine Perforierung der Verpackungsmaterialien bzw. in einer nachgeordneten Versiegelungsstation eine Gaszufuhr zur Beeinflussung einer Verpackungsatmosphäre geregelt werden kann.

Aufgabe der Erfindung ist es, eine Verpackungsmaschine zur Verfügung zu stellen, die mittels einfacher konstruktiver technischer Merkmale die zuvor im Zusammenhang mit dem Stand der Technik erläuterten Probleme behebt. Aufgabe ist es auch, dafür ein geeignetes Verfahren zur Verfügung zu stellen. Diese Aufgabe wird gelöst durch eine Verpackungsmaschine gemäß dem Anspruch 1 bzw. durch ein Verfahren gemäß dem unabhängigen Anspruch 16. Verbesserte Weiterbildungen der Erfindung sind Gegenstand der Unteransprüche.

Die Erfindung betrifft eine Verpackungsmaschine, die eine Steuereinheit, mindestens eine Messeinrichtung sowie mehrere Arbeitseinheiten für unterschiedliche Prozesse umfasst, wobei die Steuereinheit mit den Arbeitseinheiten sowie mit der Messeinrichtung funktional verbunden ist, wobei die Messeinrichtung dazu konfiguriert sind, Ist-Prozesswerte an einer der jeweiligen Arbeitseinheiten zu erfassen und an die Steuereinheit weiterzuleiten, um einen Prozessstatus an der Arbeitseinheit zu überwachen. Ferner ist bei der Erfindung die Steuereinheit dazu ausgebildet, durch einen Vergleich der an sie von der Messeinrichtung weitergeleiteten Ist-Prozesswerte mit dazugehörigen Soll-Prozesswerten aus einem mit ihr verbundenen Speicher einen Programmablauf für die jeweilige Arbeitseinheit selbst und/oder bezüglich der Arbeitseinheiten aufeinander abgestimmt selbststeuernd herzustellen, gemäß welchem die jeweiligen Arbeitseinheiten selbst und/oder aufeinander abgestimmt funktionieren.

Bei der Erfindung ist eine der Arbeitseinheiten als Siegelstation ausgebildet, die mindestens einen als die Messeinrichtung ausgebildeten Feuchtigkeitssensor umfasst, der funktional mit der Steuereinheit verbunden ist und der dazu ausgebildet ist, während des Programmablaufs als zeitabhängige Messgröße eine Feuchtigkeit innerhalb der Siegelstation zu erfassen, wobei der Programmablauf einen Evakuierungsvorgang umfasst.

Erfindungsgemäß ist die Steuereinheit dazu ausgebildet, während des Evakuierungsvorgangs der Siegelstation eine Änderungsrate der Feuchtigkeit (d.h. Änderung der Feuchtigkeit pro Zeit) zu berechnen. Dadurch lässt sich eine Zunahme der Feuchtigkeit erkennen.

Erfindungsgemäß ist die Steuereinheit dazu ausgebildet, den an der Siegelstation durchgeführten Evakuierungsvorgang vor Erreichen eines innerhalb der Siegelstation sollwertigen Vakuumdrucks sofort oder nach Ablauf einer vorgegebenen Verzögerungszeit abzubrechen, wenn die Änderungsrate der Feuchtigkeit gleich oder größer als ein vorbestimmter Schwellenwert ist oder wenn eine Differenz der Änderungsrate minus dem Schwellenwert von einem negativen Wert auf einen positiven Wert und wieder zurück von einem positiven Wert auf einen negativen Wert gewechselt ist. Die Änderungsrate der Feuchtigkeit ist allgemein ein Maß dafür, wie schnell sich die Feuchtigkeit während eines Arbeitstakts ändert. Damit kann unabhängig vom herzustellenden Produkt, d.h. unabhängig von dessen Verpackungsinhalt, ein für den Abbruch des Evakuierungsvorgangs geeigneter Richtwert zur Verfügung gestellt werden. Außerdem bildet die Änderungsrate der Feuchtigkeit eine geeignete Größe zum Vorhersagen einer Tendenz des Druckverlaufs, worauf basierend festgestellt werden kann, ob der Evakuierungsvorgang noch den gewünschten Vakuumdruck erzielen kann oder nicht. Bei der Erfindung bildet die Änderungsrate insbesondere einen zweckmäßigen Indikator dafür, ab welchem Zeitpunkt es während des Evakuierungsvorgangs zum Ausdampfen des zu verpackenden Produkts kommt, d.h. ab welchem Zeitpunkt der Feuchtigkeitsgehalt des Produkts durch den Evakuierungsprozess abnimmt.

Vorzugsweise ist die Steuereinheit dazu ausgebildet, den Evakuierungsvorgang abzubrechen, wenn die Änderungsrate der Feuchtigkeit positiv ist und/oder gleich oder größer als ein vorbestimmter positiver Schwellenwert für die Änderungsrate ist. Die positive Änderungsrate gilt insbesondere bei Lebensmittelverpackungsprozessen als zuverlässiger Indikator dafür, dass der Verpackungsinhalt des herzustellenden Produkts einen gewissen Feuchtigkeitsgehalt aufweist, wobei es beim Evakuieren des Produkts zum Feuchtigkeitsverlust des verpackten Inhalts, in der Praxis auch als "Ausdampfen" bezeichnet, kommen kann. Dies ist nicht immer unerwünscht, weil darunter bei manchen Produkten die Produktqualität leiden kann. Weiter bildet die positive Änderungsrate einen Indikator dafür, dass durch das Ausdampfen Wasserdampf entsteht, wodurch der Feuchtigkeitsgehalt innerhalb der Verpackung zunimmt. Dies kann jedoch dazu führen, dass der erwünschte Vakuumdruck innerhalb einer vorgegeben Zeit nicht erreicht wird, weil eine beim Evakuierungsvorgang dafür eingesetzte Vakuumpumpe negativ beeinflusst wird, d.h. deren Leistung mit vorliegender Feuchtigkeitserfassung möglicherweise reduziert wird.

Eine zweckmäßige Variante sieht vor, dass die Steuereinheit dazu konfiguriert ist, mittels einer daran ausgebildeten Filterfunktion negative Änderungsraten während des Beginns des Evakuierungsvorgangs auszufiltern. Dies ist zweckmäßig, weil sich der gemessene Feuchtigkeitsgehalt während des Beginns des Evakuierungsvorgangs bei trockenen und feuchten Produkten ähnlich verhält. Dabei kann zunächst Feuchtigkeit aus der Verpackung entfernt werden, bevor es zum Ausdampfen eines feuchten Verpackungsinhalts kommt. Letzteres ist unerwünscht und kann durch eine positive Änderungsrate indiziert werden.

Vorzugsweise ist die Steuereinheit dazu ausgebildet, einen Abbruch des Evakuierungsvorgangs als Schlechttakt abzuspeichern, wenn ein nicht sollwertiges Produktvakuum unzulässig ist. Gemäß einer Ausführungsform ist die Steuereinheit dazu ausgebildet, einen Abbruch des Evakuierungsvorgangs als Guttakt abzuspeichern, wenn ein nicht sollwertiges Produktvakuum zulässig ist.

Es ist möglich, dass der Feuchtigkeitssensor innerhalb einer Siegelkammer der Siegelstation angeordnet ist. Für einen besseren Schutz des Feuchtigkeitssensors sieht eine verbesserte Variante vor, dass die Siegelstation ein Siegelwerkzeugunterteil sowie eine daran integral ausgebildete Evakuierungsleitung umfasst, wobei der Feuchtigkeitssensor in der Evakuierungsleitung angeordnet ist. Vorzugsweise ist der Feuchtigkeitssensor in der Evakuierungsleitung in einem Abschnitt angeordnet, in welchen mehrere Abschnitte der Evakuierungsleitung münden. Dadurch kann im Mündungsabschnitt die Feuchtigkeit unabhängig von den Feuchtigkeitswerten der einzelnen Abschnitte der Evakuierungsleitung ermittelt werden.

Gemäß einer Ausführungsform umfasst die Siegelstation ein Siegelwerkzeugunterteil sowie eine mit dem Siegelwerkzeugunterteil verbundene Evakuierungsleitung, wobei der Feuchtigkeitssensor in der Evakuierungsleitung angeordnet ist. Diese Variante bietet Vorteile hinsichtlich der Herstellung des Siegelwerkzeugunterteils. Vorzugsweise verbindet die Evakuierungsleitung das Siegelwerkzeugunterteil mit einer Vakuumpumpe und umfasst ein Ventil, wobei der Feuchtigkeitssensor zwischen der Vakuumpumpe und dem Ventil angeordnet ist.

Vorzugsweise umfasst die Verpackungsmaschine einen weiteren Speicher, beispielsweise einen Ringpuffer, wobei die Steuereinheit dazu ausgebildet ist, intervallweise, insbesondere in einem Intervall mit einer Dauer von 1 bis 50 Millisekunden, an der Siegelstation erfasste zeitabhängige Messwerte auf dem weiteren Speicher abzuspeichern. Insbesondere kann die Steuereinheit dazu ausgebildet sein, in Volt gemessene Messwerte für die Feuchtigkeit innerhalb der Siegelstation in einem Intervall mit einer Dauer von 1 bis 50 Millisekunden, insbesondere in einem Intervall mit einer Dauer von 4 bis 10 Millisekunden in dem weiteren Speicher abzuspeichern.

Gemäß einer Ausführungsform ist die Steuereinheit dazu ausgebildet, anhand mehrerer absoluter Messwerte der Feuchtigkeit oder diesbezüglicher Spannungssignale eine Regressionsgerade zu berechnen, deren Steigung der Änderungsrate der Feuchtigkeit entspricht. Die Berechnung der Regressionsgeraden dient gewissermaßen als Filterfunktion. Beispielsweise könnten dafür 10 bis 50 Messwerte zur Berechnung der Regressionsgerade von der Steuereinheit verwendet werden. Vorzugsweise kann die Steuereinheit dazu konfiguriert sein, Messwerte, die extrem außerhalb eines Trends liegen, beispielsweise einer kleiner werdenden Änderungsrate, unabhängig davon ob diese positiv oder negativ ist, mittels einer zur Steuereinheit gehörigen Filterfunktion bei der Berechnung der Änderungsrate unberücksichtigt zu lassen.

Vorzugsweise ist die Steuereinheit dazu ausgebildet, als Filterfunktion und Bedingung für den Abbruch des Evakuierungsvorgangs einen Messzeitraum von 4 bis 500 Millisekunden, vorzugsweise einen Messzeitraum von 30 bis 100 Millisekunden zu berücksichtigen, innerhalb welchem die Änderungsrate der Feuchtigkeit ausschließlich positiv ist.

Bevorzugterweise ist die Steuereinheit dazu ausgebildet, eine Fehlermeldung, beispielsweise über eine HMI-Schnittstelle der Verpackungsmaschine, auszugeben, wenn durch die Steuereinheit während des Evakuierungsvorgangs keine positive Änderungsrate der Feuchtigkeit feststellbar ist und der sollwertige Vakuumdruck nicht innerhalb der Siegelstation erreichbar ist. Obwohl der gewünschte Vakuumdruck nicht erreicht wird, was an sich für ein ausdampfendes feuchtes Produkt spricht, zeigt dabei die während des Evakuierungsvorgangs nicht ansteigende Feuchtigkeitskurve an, dass die Siegelstation undicht ist.

Vorzugsweise ist die Verpackungsmaschine eine Tiefziehverpackungsmaschine (15), ein Traysealer oder eine Kammerbandmaschine.

Vorzugsweise umfasst die Arbeitseinheit ein bewegliches Unterteil und ein Oberteil, die dazwischen eine Formkammer und/oder eine Siegelkammer einschließen und jeweils mindestens eine Druckmesseinheit aufweisen. Der zuvor im Zusammenhang mit anderen Ausführungsformen beschriebene Evakuierungsvorgang kann insbesondere innerhalb der Siegelkammer durchgeführt werden.

Gemäß einer Variante umfasst der Programmablauf einen Begasungsvorgang, wobei die Steuereinheit dazu ausgebildet ist, den Begasungsvorgang zu starten, wenn der Evakuierungsvorgang beendet ist. Bei der prozessgesteuerten Verpackungsmaschine kann der Begasungsvorgang insbesondere durch den Abbruch des Evakuierungsvorgangs mittels der Steuereinheit gestartet werden. Dabei ist es möglich, dass durch den Begasungsvorgang eine gewisse Restfeuchte aus dem Verpackungsinneren verdrängt werden kann.

Vorzugsweise umfasst der Programmablauf an der Arbeitseinheit einen Siegelvorgang, wobei die Steuereinheit dazu ausgebildet ist, den Siegelvorgang zu starten, wenn der Evakuierungsvorgang und/oder der Begasungsvorgang beendet sind.

Die Erfindung betrifft auch ein Verfahren zur Selbststeuerung eines Programmablaufs eines Prozesses an unterschiedlichen Arbeitseinheiten einer Verpackungsmaschine, wobei gemäß dem Programmablauf ein Prozess und/oder gemäß dem Programmablauf mehrere, funktional aufeinander abgestimmte Prozesse während des Betriebs der Verpackungsmaschine an den jeweiligen Arbeitseinheiten durchgeführt werden, wobei an mindestens einer der jeweiligen Arbeitseinheiten Ist-Prozesswerte erfasst und an eine Steuereinheit der Verpackungsmaschine weitergeleitet werden, wobei die Steuereinheit die an sie weitergeleiteten Ist-Prozesswerte mit dazugehörigen Soll-Prozesswerten vergleicht und daraus resultierend den jeweiligen Programmablauf für die Arbeitseinheiten selbst und/oder bezüglich der jeweiligen Arbeitseinheiten aufeinander abgestimmt selbststeuernd herstellt und darauf basierend den Betrieb der Verpackungsmaschine koordiniert, wobei an einer als Siegelstation ausgebildeten Arbeitseinheit der Verpackungsmaschine mindestens ein als Messeinrichtung ausgebildeter Feuchtigkeitssensor als zeitabhängige Messgröße eine Feuchtigkeit innerhalb der Siegelstation erfasst, wobei die Steuereinheit während des Programmablaufs an der Siegelstation zumindest abschnittsweise eine Änderungsrate der Feuchtigkeit berechnet, und wobei die Steuereinheit einen an der Siegelstation durchgeführten Evakuierungsvorgang vor Erreichen eines innerhalb der Siegelstation sollwertigen Vakuumdrucks sofort oder nach Ablauf einer vorgegebenen Verzögerungszeit abbricht, wenn die Änderungsrate der Feuchtigkeit gleich oder größer als ein vorbestimmter Schwellenwert ist oder wenn eine Differenz der Änderungsrate minus dem Schwellenwert von einem negativen Wert auf einen positiven Wert und wieder zurück von einem positiven Wert auf einen negativen Wert wechselt.

Vorzugsweise bricht die Steuereinheit den Evakuierungsvorgang ab, wenn die Änderungsrate der Feuchtigkeit positiv und/oder gleich oder größer als ein vorbestimmter positiver Schwellenwert für die Änderungsrate ist. Dies kann nämlich ein Indiz dafür sein, dass das zu verpackende Produkt ausdampft, d.h. dessen Feuchtigkeitsgehalt abnimmt.

Eine Möglichkeit zur Berechnung der Änderungsrate wäre, dass die Steuereinheit anhand mehrerer absoluter Messwerte der Feuchtigkeit eine Regressionsgerade berechnet, deren Steigung die Änderungsrate der Feuchtigkeit bestimmt.

Vorzugsweise kann die Steuereinheit als Filterfunktion und Bedingung für den Abbruch des Evakuierungsvorgangs einen Messzeitraum von 4 bis 500 Millisekunden berücksichtigen, innerhalb welchem die Änderungsrate der Feuchtigkeit ausschließlich positiv ist. Vorstellbar ist es auch, dass die Steuereinheit dazu ausgebildet ist, den Messzeitraum ab dem Zeitpunkt laufen zu lassen, wenn zum ersten Mal während des Evakuierungsvorgangs die Änderungsrate ungefähr gleich Null ist, d.h., wenn die Änderungsrate ihr Vorzeichen wechselt.

Bevorzugterweise kann die Steuereinheit eine Fehlermeldung ausgeben, wenn durch die Steuereinheit während des Evakuierungsvorgangs keine positive Änderungsrate der Feuchtigkeit festgestellt wird und der sollwertige Vakuumdruck nicht innerhalb der Siegelstation erreicht wird. Dadurch kann ein undichtes Werkzeug festgestellt werden.

Gemäß einer Variante startet die Steuereinheit einen Begasungsvorgang an der Siegelstation, wenn der Evakuierungsvorgang beendet, insbesondere abgebrochen wird. Der Begasungsvorgang kann eine in der Verpackung verbliebene Restfeuchte verdrängen, sodass das zu verpackende Produkt in einer gewünschten Atmosphäre verpackt werden kann.

Bei einer oder mehreren Ausführungsformen der Erfindung sind im Gegensatz zu bekannten zeitgesteuerten Verpackungsmaschinen die Verpackungsmaschine sowie das Verfahren dafür mittels intelligenter Sensorik und Steuerungstechnik prozessgesteuert. Die jeweiligen Arbeitsprozesse werden insbesondere mittels Sensoren überwacht und in Abhängigkeit damit erfasster Werte gesteuert. Bei einer bevorzugten Verpackungsmaschine ist der Programmablauf der an ihr eingesetzten Arbeitseinheiten nicht mehr primär an durch den Bediener voreingestellte Prozesszeiten gebunden, sondern wird während des Betriebs an den aktuellen Herstellungsprozess, insbesondere an den messbaren Prozessfortschritt der jeweiligen Arbeitseinheiten angepasst. Dabei wird vor allem überwacht, wie weit Ist-Prozesswerte hinsichtlich vorgegebener oder errechenbarer Soll-Prozesswerte an den jeweiligen Arbeitseinheiten fortgeschritten sind. Auf starr ablaufende Prozesszeiten, die wie bisher an der Maschine vom Bediener manuell voreingestellt wurden, wird primär keine Rücksicht mehr genommen, weil die jeweiligen Prozesse an den Arbeitseinheiten solange laufen, bis ein oder mehrere Soll-Prozesswerte erreicht sind, d.h., dass die jeweiligen Prozesse sensorgesteuert sind.

Wenn überhaupt, dann werden bei der Erfindung Prozesszeiten verwendet, die automatisch aus einem Speicher abrufbar sind und anhand von spezifischen Herstellungsparametern, betreffend das Produkt, das Werkzeug und/oder das Verpackungsmaterial generierbar sind. Somit kann die Verpackungsmaschine bei einem Werkzeugwechsel und/oder einem Produktwechsel schnell angepasst werden, ohne dass der Bediener lange Zeit zur Neueinstellung der Verpackungsmaschine benötigt. Bei der Erfindung passt die Verpackungsmaschine daher ihren Betrieb selbst optimal an.

Dafür umfasst die Verpackungsmaschine vorzugsweise eine Steuereinheit, mehrere Messeinrichtungen sowie mehrere Arbeitseinheiten für unterschiedliche Prozesse, wobei die Steuereinheit mit den Arbeitseinheiten sowie mit den Messeinrichtungen funktional verbunden ist. Die Messeinrichtungen sind dazu konfiguriert, Ist-Prozesswerte an den jeweiligen Arbeitseinheiten zu erfassen und an die Steuereinheit weiterzuleiten, um einen Prozessstatus an den jeweiligen Arbeitseinheiten zu überwachen. Die Steuereinheit ist vorzugsweise dazu ausgebildet, durch einen Vergleich der an sie von den jeweiligen Messeinrichtungen weitergeleiteten Ist-Prozesswerte mit dazugehörigen Soll-Prozesswerten, insbesondere mit einem dazugehörigen Soll-Prozesswert-Bereich, aus einem mit ihr verbundenen Speicher einen Programmablauf für die jeweiligen Arbeitseinheiten selbst und/oder bezüglich der Arbeitseinheiten aufeinander abgestimmt selbststeuernd herzustellen. Die jeweiligen Arbeitseinheiten können dann in Abhängigkeit der daran erfassten Ist-Prozesswerte selbst und/oder diesbezüglich aufeinander abgestimmt funktionieren.

Selbststeuernd im Sinne der Erfindung bedeutet, dass der Programmablauf an mindestens einer Arbeitseinheit nicht gemäß einer voreingestellten Prozesszeit abläuft. Der Programmablauf an einer Arbeitseinheit passt sich vielmehr bezüglich den daran erfassten Ist-Prozesswerten an, ist also sensorgesteuert. Bei der Erfindung funktioniert die Steuereinheit als funktionales Bindeglied zwischen den Messeinrichtungen und den Arbeitseinheiten. Vorzugsweise werden die erfassten Ist-Prozesswerte von den Messeinrichtungen an die Steuereinheit weitergeleitet, welche hinsichtlich der Ist-Prozesswerte die jeweiligen Programmabläufe für die Arbeitseinheiten selbst und/oder aufeinander angepasst steuert.

Insbesondere kann ein Prozess an einer Arbeitseinheit dann beginnen, wenn eine funktional vorausgelagerte Arbeitseinheit mindestens einen sollwertigen Prozesswert erreicht. So lässt sich insbesondere die Abfolge der einzelnen Arbeitseinheiten gut aufeinander abstimmen. Es lässt sich bei der Erfindung eine funktionale Verknüpfung zwischen den einzelnen Arbeitseinheiten herstellen, sodass die jeweiligen Arbeitseinheiten nahtlos aufeinander folgend arbeiten können.

Außerdem ermöglicht eine Ausführungsform mittels der Ist-Prozesswertebestimmung an den jeweiligen Arbeitseinheiten eine Frühstartermittlung einzelner Arbeitseinheiten. Dies beruht darauf, dass für das Ansteuern der Ventile und/oder für das Generieren von Steuersignalen eine gewisse Reaktionszeit benötigt wird, die in Fachkreisen auch Totzeit genannt wird. Um solche Totzeiten zu verringern, kann bei der Erfindung basierend auf der Ist-Prozesswertermittlung mindestens der Ablauf einer Arbeitseinheit vorzeitig, d.h. gewisse Zeit vor dem Erreichen eines Soll-Prozesswertes, gestartet werden. Dies führt insgesamt zu Zeitersparnissen, weil die jeweiligen Arbeitsprozesse im Ablauf besser aufeinander abgestimmt sind.

Vorzugsweise unterscheidet sich die Verpackungsmaschine im Wesentlichen dadurch vom Stand der Technik, dass sie nicht mehr zeitgesteuert gemäß einem voreingestellten starren Programmablauf, d.h. mit bestimmten Prozesszeiten für die jeweiligen Arbeitseinheiten betrieben wird. Vielmehr ist die erfindungsgemäße Verpackungsmaschine mittels der an ihr vorhandenen Sensorik und Steuerung dazu in der Lage, die jeweiligen Prozesse der Arbeitseinheiten herstellungspräzise an die aktuell daran erfassten Ist-Prozesswerte, und zwar vorzugsweise unabhängig davon, wie lange der jeweilige Prozess bereits durchgeführt wurde, anzupassen. Die jeweiligen Prozesse lassen sich dadurch in wirtschaftlicher Hinsicht optimiert durchführen und können gegebenenfalls derart aufeinander abgestimmt ablaufen, dass insgesamt größere Losgrößen innerhalb geringerer Zykluszeiten herstellbar sind. Außerdem lässt sich damit für sämtliche Produkte dieselbe Qualität erzeugen.

Im Gegensatz zum Stand der Technik hängt die Leistung der Verpackungsmaschine nicht mehr von der Einstellfähigkeit des Maschinenbedieners ab, sondern von den technischen Fertigkeiten der Verpackungsmaschine selbst, sich selbststeuernd an den Herstellungsprozess, d.h. an die aktuell erfassten Prozesswerte an den Arbeitseinheiten, anzupassen.

Besonders vorteilhaft hat sich die Verpackungsmaschine für die Startphase eines Herstellungsprozesses gezeigt, weil dabei nicht mehr mehrere Probeanläufe zur optimalen Einstellung der Verpackungsmaschine nötig sind. Vielmehr ermöglicht die Verpackungsmaschine eine von Anfang an optimale Herstellung zu erzeugender Produkte, weil die jeweiligen Prozesse an den Arbeitseinheiten sofort hinsichtlich der daran erfassten Ist-Prozesswerte mittels der Steuereinheit per Rückkopplung im Ablauf steuerbar sind.

Dadurch, dass die Verpackungsmaschine selbst zur Optimierung der daran durchgeführten Prozesse ausgebildet ist, kommt es zu einer erhöhten Taktleistung, wobei Personalkosten reduziert werden können.

Vorzugsweise umfasst die Verpackungsmaschine mindestens einen als Arbeitseinheit ausgebildeten Roboter. Dieser kommt insbesondere als Bestücker zu befüllender Verpackungen zum Einsatz. Der Betrieb des Roboters kann bei der Erfindung bezüglich des Ablaufs anderer Arbeitseinheiten angepasst werden. Insbesondere können vom Roboterarm durchgeführte Beschleunigungen hinsichtlich des Fortschritts anderer Arbeitseinheiten an der Verpackungsmaschine angepasst werden.

Gemäß einer Ausführungsform der Erfindung kann die Verpackungsmaschine als eine Tiefziehverpackungsmaschine, ein Traysealer, oder eine Kammerbandmaschine ausgebildet sein. Da bei solchen Verpackungsmaschinen mehrere Arbeitsprozesse, insbesondere in Abstimmung zueinander, ablaufen, lässt sich die selbststeuernde Rückkopplung anhand der Steuereinheit der erfindungsgemäßen Verpackungsmaschine besonders leistungssteigernd einsetzen. Diese Verpackungsmaschinen können dann selbststeuernd und automatisch ihren Herstellungsprozess regeln, ohne dabei primär auf voreingestellte Prozessarbeitszeitzyklen zurückgreifen zu müssen. Diesbezüglich lassen sich an solchen Maschinen insbesondere auch Umrüstzeiten enorm reduzieren.

Vorzugsweise dient der mit der Steuereinheit verbundene Speicher als Datenreservoir, aus welchem die Steuereinheit die Soll-Prozesswerte erhält, um möglichst zeitnah zur Erfassung der Ist-Prozesswerte diesbezüglich eine rückkoppelnde Steuerung der jeweiligen Arbeitseinheiten durchzuführen.

Insbesondere ist es möglich, dass der Speicher als Datenbank, vorzugsweise als Wissensdatenbank, ausgebildet ist, die dazu konfiguriert ist, hinsichtlich Daten eines mittels der Verpackungsmaschine herzustellenden Produkts die Soll-Prozesswerte für die jeweiligen Arbeitseinheiten herzuleiten. Bevorzugterweise kann das herzustellende Produkt, insbesondere eine Folienspezifikation, ein Werkzeugtyp und/oder ein zu verpackendes Lebensmittelprodukt, über eine Eingabekonsole der Verpackungsmaschine aufgerufen werden, wobei basierend auf dieser Einstellung ein besonderer Datensatz an Soll-Prozesswerten durch den Speicher, insbesondere die darin enthaltene Datenbank, der Steuereinheit für den Herstellungsprozess zur Verfügung gestellt werden kann. Dies hätte den Vorteil, dass der Maschinenbediener bei Produktionsstart lediglich das herzustellende Produkt auf der Eingabekonsole der Verpackungsmaschine auswählen muss, wobei in Folge darauf der Herstellungsprozess selbststeuernd durch die Verpackungsmaschine übernommen wird.

Besonders vielseitig lässt sich die Datenbank dann einsetzen, wenn sie als Bestandteil eines Datenbanksystems ausgebildet ist, wobei das Datenbanksystem weiter eine Datenbankverwaltungseinheit umfasst, die für einen bidirektionalen Datenaustausch zwischen der Steuereinheit und der Datenbank konfiguriert ist. Mittels der Datenbankverwaltungseinheit lassen sich nicht nur basierend auf den erfassten Ist-Prozesswerten an den Arbeitseinheiten diesbezüglich die relevanten Soll-Prozesswerte aus der Datenbank ermitteln und/oder auslesen, sondern darüber hinaus auch Steuerungsfunktionen, insbesondere ausgehend von der Steuereinheit an der Datenbank, durchführen, so dass beispielsweise auf der Datenbank hinterlegte Datensätze korrigiert, angepasst und/oder ersetzt werden können. Die erfindungsgemäße Verpackungsmaschine ließe sich dann beispielsweise angesichts eines neu, nicht bereits zuvor damit hergestellten Produkts problemlos an ein solches anpassen. Updates der auf der Datenbank hinterlegten Datensätze ließen sich beispielsweise über eine VPN-Verbindung, eine Drahtlosverbindung, beispielsweise mittels RFID, oder von einem USB-Stick auf die Datenbank spielen.

Vorzugsweise werden die Prozesse an der Verpackungsmaschine insbesondere durch format-, prozess- und/oder folienabhängige Informationen gesteuert. Folienabhängige Informationen betreffen vor allem eine Ziehtiefe, eine Siegelnahtbreite, ein Endvakuum beim Siegeln, eine Anzahl von Packungen, eine Packungsgröße und/oder eine Formtiefe. Prozessabhängige Informationen sind vor allem ein spezifischer Formdruck, ein spezifischer Siegeldruck, eine Schneidzeit, maximal zulässige Frühstartzeiten beim Öffnen oder Schließen eines Hubwerks und/oder maximal zulässige Frühstartzeiten beim Folienvorschub. Folienabhängige Informationen sind insbesondere ein Folientyp, eine Siegelschicht, eine Foliendicke, eine Siegelschichtdicke, eine Abkühlzeit (Stabilisierungszeit) in der Form, eine ideale Heizzeit, eine ideale Siegelzeit, eine ideale Heiztemperatur beim Formen und Vorheizen und/oder eine ideale Heiztemperatur beim Siegeln. Insbesondere ist die Steuereinheit dazu konfiguriert, basierend auf den format-, prozess- und/oder folienabhängigen Informationen die Soll-Prozesswerte und/oder Steuersignale für den Herstellungsprozess herzustellen. Vorzugsweise basieren die Soll-Prozesswerte auf Daten des herzustellenden Produkts, die für dieses insbesondere eine Siegelfläche, einen Siegeldruck, ein Endvakuum, eine Folienart und/oder eine Foliendicke oder eine Folienspezifikation, wie beispielsweise den Schichtaufbau, angeben.

Vorzugsweise können Informationen betreffend die Folienspezifikation mittels einer Drahtlosverbindung in der Datenbank hinterlegt werden. insbesondere können die Informationen über das Folienmaterial von einem an der Folie befestigten RFID-Tag mittels eines an der Verpackungsmaschine vorgesehenen RFID-Lesegeräts ausgelesen und von diesem in der Datenbank hinterlegt werden.

Für jedes herzustellende Produkt gibt es vorzugsweise eine Vorauswahl bestimmter Soll-Prozesswerte, die der prozessgeführten Selbststeuerungsfunktion der Verpackungsmaschine während des Betriebs zur Verfügung stehen. Die Programmabläufe an den jeweiligen Arbeitseinheiten sind somit hinsichtlich der vorgegebenen Soll-Prozesswerte anpassbar.

Vorzugsweise geben die Soll-Prozesswerte eine optimale Form- und/oder Siegeltemperatur, einen optimalen Siegel- und/oder Formdruck, und/oder für eine als Formstation ausgebildete Arbeitseinheit mindestens eine Stabilisierungszeit an. Mit Erreichen des oder der vorgegebenen optimalen Soll-Prozesswerte kann die Steuereinheit darüber entscheiden, wann der Prozess an einer Arbeitseinheit beendet und ein nachfolgender Prozess an derselben Arbeitseinheit oder an einer anderen Arbeitseinheit gestartet werden kann, um den Produktionsablauf mit fließenden Übergängen zwischen den Prozessen der jeweiligen Arbeitseinheiten zu steuern.

Gemäß einer Ausführungsvariante ist der Speicher in der Steuereinheit integriert ausgebildet oder liegt alternativ als externe Einheit vor. Bei der integralen Ausbildung des Speichers in der Steuereinheit kann der Speicher direkt über eine Bedienkonsole der Verpackungsmaschine angesteuert werden, wobei bei dieser Variante vornehmlich auf dem Speicher abgelegte Datensätze mittels der Bedienkonsole aktualisiert, ersetzt und/oder ergänzt werden können. Insbesondere als externe Einheit könnte der Speicher mit mehreren Verpackungsmaschinen funktional verbunden sein, wobei die jeweiligen Steuereinheiten der mehreren Verpackungsmaschinen funktionalen Zugriff auf den als externe Einheit ausgeführten Speicher haben können. Dies ist insbesondere dann sinnvoll, wenn mehrere Verpackungsmaschinen parallel zueinander in einer Produktionshalle arbeiten, wobei es nicht unbedingt notwendig ist, dass die jeweiligen Verpackungsmaschinen jeweils mit einem eigenen Speicher ausgestattet sind. Vorstellbar wäre es auch, dass die mehreren Verpackungsmaschinen auf unterschiedliche Datensätze des Speichers zurückgreifen. Dabei wäre es denkbar, dass an den Verpackungsmaschinen unterschiedliche Herstellungsprozesse ablaufen.

Vorzugsweise ist der Speicher mit einem externen Netzwerk funktional verbindbar, wobei der Speicher über das externe Netzwerk aktualisierbar und/oder ansteuerbar ist. Vorstellbar wäre es z.B., dass ein Maschinenbediener von seinem Computerarbeitsplatz aus Datensätze über das externe Netzwerk, in welchem sein Computer funktional eingebunden ist, auf den Speicher spielt. Vorstellbar wäre es auch, dass das externe Netzwerk vom Verpackungsmaschinenhersteller dafür genutzt wird, den Speicher der Verpackungsmaschine anzusteuern, obwohl diese bereits beim Lebensmittelverpacker in die Produktion eingebunden ist. Anhand dieser Variante können beliebige Daten aus dem Speicher ausgelesen werden, beispielsweise auch Fehlermeldungen, Betriebszustände, Produktionsdaten und/oder Serverdaten.

Vorzugsweise umfassen die jeweiligen Messeinrichtungen mindestens einen Kraft-, Druck-, Weg-, Temperatur-, Infrarot-, Ultraschall-, Induktions-, Laser- und/oder einen weiteren Feuchtigkeitssensor. Die jeweiligen Sensoren sind insbesondere integral in den Arbeitseinheiten verbaut, um möglichst genau die daran vorliegenden Ist-Prozesswerte zu erfassen. Vorzugsweise erfassen die eingesetzten Sensoren die jeweiligen Ist-Prozesswerte kontinuierlich während des Betriebs der Verpackungsmaschine, so dass beim Erreichen eines Soll-Prozesswerts schnell von der Steuereinheit reagiert werden kann, um gegebenenfalls den Prozess zu beenden und einen daran anschließenden Prozess zu starten.

Vorzugsweise umfasst zumindest eine der Arbeitseinheiten ein bewegliches Unterteil und ein Oberteil, die dazwischen eine Formkammer oder eine Siegelkammer einschließen und jeweils mindestens eine Druckmesseinheit aufweisen. Damit lassen sich die Druckverläufe innerhalb des Oberteils und Unterteils während dem Herstellungsprozess überwachen. Die Steuereinheit kann dabei in Abhängigkeit der Druckverläufe eine Steuerung der Druckerzeugung durchführen. Ebenfalls könnte die Steuereinheit in Abhängigkeit der Druckverläufe andere Prozesse innerhalb der Formkammer oder der Siegelkammer steuern.

Gemäß einer Ausführungsform ist eine der Arbeitseinheiten der Verpackungsmaschine als Formstation ausgebildet, die mindestens eine Heizplatte umfasst. Diese dient zum Erhitzen eines in die Formstation hinein geführten Folienabschnitts, damit sich dieser anschließend gut verformen lässt. Vorteilhaft ist es, wenn eine Funktion der Heizplatte basierend auf erfassten Druckwerten innerhalb der Formstation steuerbar ist, insbesondere wenn eine Heizzeit der Heizplatte in Abhängigkeit eines erreichten Druckniveaus innerhalb der Formstation aufrufbar ist.

Gemäß einer Variante umfasst die Formstation eine Heizkammer und eine Formkammer, die räumlich getrennt voneinander ausgebildet sind. Die Heizkammer dient dabei als Vorheizung und umfasst vorzugsweise eine untere und eine obere Heizplatte, zwischen welchen ein Folienabschnitt klemmbar ist. Um eine besonders große Klemmkraft zu erzeugen, kann oberhalb der oberen Heizplatte ein Druckerzeuger angeordnet sein, insbesondere eine aufblasbare Membran, der die obere Heizplatte nach unten drücken kann.

Vorstellbar ist es, dass eine der Arbeitseinheiten als Siegelstation ausgebildet ist. Diese kann optional mit einer Begasungseinheit ausgestattet sein, um für das zu versiegelnde Produkt eine gewünschte Atmosphäre zu schaffen.

Bevorzugterweise ist der Ist-Prozesswert ein in der Arbeitseinheit erfasster Druck, wobei die Steuereinheit dazu konfiguriert ist, mindestens einen Arbeitsprozess an der oder an mindestens einer anderen Arbeitseinheit zu beenden oder zu beginnen, wenn der erfasste Druck ein vorbestimmtes Druckniveau erreicht hat. Der Arbeitsprozess kann beispielsweise ein Heiz- oder Abkühlvorgang sein, der gemäß einer aus dem Speicher vorliegenden Heiz- oder Abkühlzeit abläuft.

Die Erfindung betrifft auch ein Verfahren zur Selbststeuerung eines Programmablaufs eines Prozesses an unterschiedlichen Arbeitseinheiten einer Verpackungsmaschine. Gemäß dem Programmablauf wird ein Prozess und/oder mehrere, funktional aufeinander abgestimmte Prozesse während des Betriebs der Verpackungsmaschine an den jeweiligen Arbeitseinheiten durchgeführt, wobei an den jeweiligen Arbeitseinheiten Ist-Prozesswerte erfasst und an eine Steuereinheit der Verpackungsmaschine weitergeleitet werden, wobei die Steuereinheit die an sie weitergeleiteten Ist-Prozesswerte mit dazugehörigen Soll-Prozesswerten vergleicht und daraus resultierend den jeweiligen Programmablauf für die Arbeitseinheiten selbst und/oder bezüglich der jeweiligen Arbeitseinheiten aufeinander abgestimmt selbststeuernd herstellt und darauf basierend den Betrieb der Verpackungsmaschine koordiniert.

Der Betrieb der Verpackungsmaschine hängt daher von den erfassten Ist-Prozesswerten an den jeweiligen Arbeitseinheiten ab. Unter Berücksichtigung von Soll-Prozesswerten für das herzustellende Produkt kann dann ausgehend von den erfassten Ist-Prozesswerten mittels der Steuereinheit bestimmt werden, ob der jeweilige Prozess an einer Arbeitseinheit weiterlaufen bzw. unterbrochen werden kann und gegebenenfalls ein nachfolgender Prozess starten darf. Die Selbststeuerung der Verpackungsmaschine hängt damit einerseits von der an den jeweiligen Arbeitseinheiten integral vorgesehenen Sensorik und andererseits von der rückkoppelnden Steuerfunktion unter Berücksichtigung von Soll-Prozesswerten ab, wobei die Soll-Prozesswerte der Steuereinheit insbesondere von einem mit der Steuereinheit verbundenen Speicher zur Verfügung gestellt werden.

Anhand des erfindungsgemäßen Verfahrens werden die jeweiligen Programmabläufe der an den Arbeitseinheiten durchgeführten Prozesse während des Betriebs angesichts der daran gemessenen Ist-Prozesswerte angepasst. Die Abfolge der Prozesse ist nicht mehr fest zeitgesteuert, sondern selbststeuernd als Funktion von gemessenen und erreichten Ist-Prozesswerten.

Das Starten eines Prozesses an einer Arbeitseinheit hängt somit vornehmlich davon ab, welche Ist-Prozesswerte an dem im Herstellungsprozess vorangelagerten Prozess und/oder mindestens einer zumindest teilweise zeitglich ablaufenden Arbeitseinheit gemessen werden. Vorzugsweise startet der Prozess an einer Arbeitseinheit dann, wenn an einem im Herstellungsprozess vorangelagerten Prozess der oder mindestens einer anderen Arbeitseinheit der oder die erfassten Ist-Prozesswerte den vorgegebenen Soll-Prozesswerten entsprechen. Natürlich kann es auch sein, dass die jeweiligen Prozesse zeitlich gesehen überlappend, gewissermaßen parallel zueinander oder über ein zeitliches Intervall voneinander getrennt ablaufen. Es könnte daher sein, dass der Prozess einer Arbeitseinheit bereits dann gestartet wird, wenn eine oder mehrere bestimmte Ist-Prozessgrößen an dem dieser Arbeitseinheit vorangelagerten Prozess noch nicht die Soll-Prozessgrößen erreicht haben. Dies kann insbesondere zur Vermeidung von Totzeiten führen, wodurch die Taktzykluszeiten verkürzt werden können. Bei zeitlich voneinander beabstandeter Prozesse, die aufeinander folgend ablaufen, wäre es möglich, dass beim Erreichen der Soll-Prozessgröße an einem Prozess einer Arbeitseinheit der nachfolgende Prozess erst dann gestartet wird, wenn ein vorbestimmtes Zeitintervall dazwischenliegt.

Die jeweiligen Prozesse an den Arbeitseinheiten können daher mittels Sensorik und rücckoppelnder Steuerung selbst in ihrem Ablauf optimiert werden, wobei die jeweiligen optimierten Programmabläufe der Prozesse auch für die anderen Prozesse des Verfahrens zur Optimierung dienen, so dass der gesamte Programmablauf des Verfahrens der Verpackungsmaschine in Abhängigkeit der jeweiligen Prozesse zueinander optimiert werden kann.

Ausführungsformen der Erfindung werden anhand der nachfolgend beschriebenen Figuren erläutert. Es zeigen:
- Fig. 1: eine prozessgesteuerte Verpackungsmaschine in allgemeiner schematischer Darstellung,
- Fig. 2: eine Tiefziehverpackungsmaschine gemäß einer Ausführungsform der Erfindung,
- Fig. 3: einen Traysealer gemäß einer Ausführungsform der Erfindung,
- Fig. 4a: eine Formstation gemäß einer Ausführungsform der Erfindung,
- Fig. 4b: ein Prozessdiagramm für die Formstation aus Figur 4a,
- Fig. 5a: eine Formstation gemäß einer anderen Ausführungsform der Erfindung,
- Fig. 5b: ein Prozessdiagramm für die Formstation aus Figur 5a,
- Fig. 6a: eine Siegelstation gemäß einer Ausführungsform der Erfindung,
- Fig. 6b: ein Prozessdiagramm für die Siegelstation aus Figur 6a,
- Fig. 7a: eine bekannte Formstation,
- Fig. 7b ein: zeitgesteuertes Prozessdiagramm für die Formstation aus Figur 7a und
- Fig. 8: eine graphische Darstellung eines Druckverlaufs sowie eines dazugehörigen Feuchtigkeitsgehalts eines trockenen und eines feuchten Produkts innerhalb einer Siegelstation,
- Fig.: 9a eine schematische Darstellung eines Siegelwerkzeugunterteils mit Feuchtigkeitssensor und
- Fig. 9b: eine weitere schematische Darstellung eines Siegelwerkzeugunterteils mit Feuchtigkeitssensor.

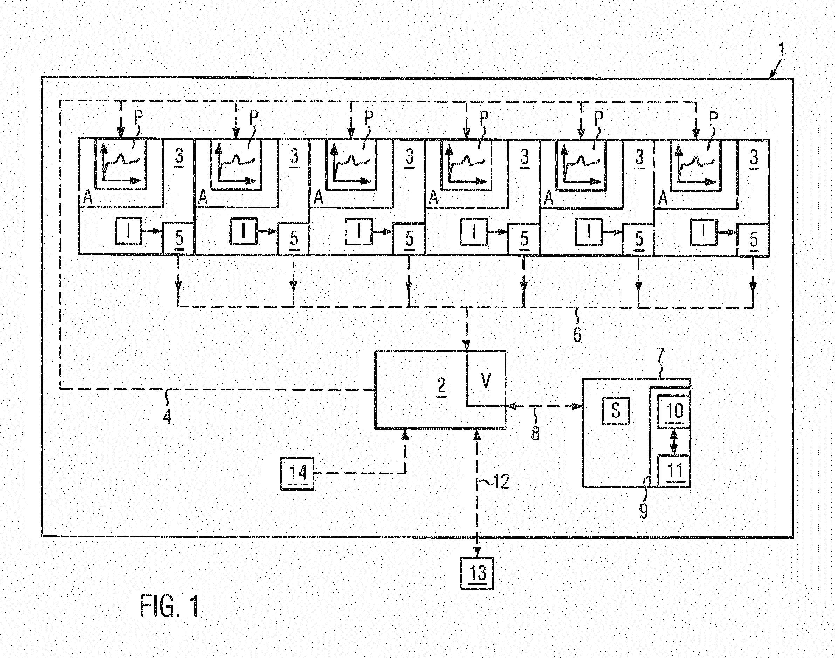

Fig. 1 zeigt in schematischer Darstellung eine erfindungsgemäße Verpackungsmaschine 1. Zur Steuerung des Herstellungsprozesses enthält die Verpackungsmaschine 1 eine Steuereinheit 2. Ferner verfügt die Verpackungsmaschine 1 über eine Vielzahl von Arbeitseinheiten 3, die jeweils mittels einer funktionalen Verbindung 4 mit der Steuereinheit 2 verbunden sind. Bei den Arbeitseinheiten 3 handelt es sich um Arbeitsstationen, die für unterschiedliche Prozesse konfiguriert sind, um dadurch das gewünschte Produkt herzustellen. Während des Herstellungsprozesses laufen die jeweiligen Arbeitseinheiten 3 zueinander koordiniert ab. Dabei können die jeweiligen Arbeitseinheiten 3 sowohl zeitlich gesehen nacheinander und/oder gewissermaßen parallel zueinander, d.h. überlappend zueinander arbeiten.

Die Verpackungsmaschine 1 enthält gemäß Fig. 1 eine Vielzahl von Messeinrichtungen 5, die jeweils in den Arbeitseinheiten 3 verbaut sind. Die Messeinrichtungen 5 sind dazu ausgebildet, Ist-Prozesswerte I an den jeweiligen Arbeitseinheiten 3 zu erfassen. Weiter zeigt Fig. 1, dass die jeweiligen Messeinrichtungen 5 über eine weitere funktionale Verbindung 6 mit der Steuereinheit 2 verbunden sind. Über die weitere funktionale Verbindung 6 können die Messeinrichtungen 5 die erfassten Ist-Prozesswerte I an die Steuereinheit 2 weiterleiten. Damit lassen sich die jeweiligen aktuellen Prozessstati der Arbeitseinheiten 3 während des Herstellungsprozesses mittels der eingesetzten Messeinrichtungen 5 überwachen.

Fig. 1 zeigt auch, dass die Steuereinheit 2 mit einem Speicher 7 verbunden ist. Gemäß Fig. 1 ist der Speicher 7 als Teil der Verpackungsmaschine 1 ausgebildet, wobei er ebenso gut als externe Einheit mit der Steuereinheit 2 der Verpackungsmaschine 1 verbunden sein könnte. Der Speicher 7, der auch eine Datenbank aufweist, ist dazu konfiguriert, Soll-Prozesswerte S zur Verfügung zu stellen. Die Soll-Prozesswerte S hängen insbesondere von spezifischen Daten des herzustellenden Produkts ab. Beispielsweise könnten sich die Soll-Prozesswerte S angesichts einer Foliendicke, einer Folienart, einer Siegelfläche, eines Siegeldrucks, eines zu evakuierenden Endvakuums und/oder eines zu verpackenden Produkts ergeben. Für jedes herzustellende Produkt, das im Wesentlichen aus dem zu verpackenden Produkt sowie der Verpackung dafür besteht, können somit unterschiedliche Soll-Prozesswerte S aus dem Speicher 7 zur Verfügung gestellt werden.

Gemäß Fig. 1 hat die Steuereinheit 2 auf die Soll-Prozesswerte S aus dem Speicher 7 über eine Datenverbindung 8 Zugriff. Insbesondere ist die Datenverbindung 8 für einen bidirektionalen Datenverkehr zwischen der Steuereinheit 2 und dem Speicher 7 ausgebildet.

Ferner zeigt Fig. 1, dass die Steuereinheit 2 dazu ausgebildet ist, durch einen Vergleich V der an sie von den jeweiligen Messeinrichtungen 5 weitergeleiteten Ist-Prozesswerte I mit den dazugehörigen Soll-Prozesswerten S aus dem mit ihr verbundenen Speicher 7 einen Programmablauf P für die jeweiligen Arbeitseinheiten 3 zu generieren. Der Programmablauf P der jeweiligen Arbeitseinheiten 3 ist für an den Arbeitseinheiten 3 ausgebildete Aktoren A vorgesehen. Die Aktoren A verrichten an den jeweiligen Arbeitseinheiten 3 am herzustellenden Produkt eine spezielle Form von Arbeit, beispielsweise Transport, Formgebungs- und/oder Begasungsarbeit.

Basierend auf den erfassten Ist-Prozesswerten I (Weg, Druck, Vakuum, Temperatur, etc.) sowie dem Vergleich dieser mit den Soll-Prozesswerten S aus dem Speicher 7 leitet die Steuereinheit 2 gemäß der Erfindung eine funktionale Rückkopplung ein, um die an den jeweiligen Arbeitseinheiten 3 vorgesehenen Aktoren A selbststeuernd gemäß dem von ihr hergestellten Programmablauf P zu koordinieren. Dabei ist die Steuereinheit 2 dazu konfiguriert, die jeweiligen Programmabläufe P für die jeweiligen Aktoren A der Arbeitseinheiten 3 selbst zu koordinieren und/oder die jeweiligen Programmabläufe P aufeinander abgestimmt selbststeuernd zu steuern, um einen reibungslosen und wirtschaftlichen Betriebsablauf der Verpackungsmaschine 1 zu gewährleisten.

Insbesondere kann die Steuereinheit 2 gemäß einer Ausführungsform der Erfindung dazu konfiguriert sein, den Programmablauf P mindestens einer Arbeitseinheit 3 in Abhängigkeit des Fortschritts eines anderen Programmablaufs mindestens einer anderen Arbeitseinheit 3 zu steuern. Dabei könnte die Steuereinheit 2 dafür sorgen, dass der Programmablauf P mindestens einer Arbeitseinheit 3 dann gestartet wird, wenn an mindestens einer anderen Arbeitseinheit 3 ein vorbestimmter Ist-Prozesswert I erfasst wird. Die jeweiligen Programmabläufe P lassen sich somit gut aufeinander abgestimmt koordinieren, wobei deren Funktion von den jeweiligen erfassten Ist-Prozesswerten an den Arbeitseinheiten 3 sowie der funktionalen Rückkopplung darauf abhängt. Die erfindungsgemäße Verpackungsmaschine 1 ist somit dazu ausgebildet, die jeweiligen an ihr durchgeführten Programmabläufe selbststeuernd zu koordinieren, wobei dies insbesondere in Echtzeit erfolgt, ohne dass dafür besondere Werte oder Abläufe durch einen Maschinenbediener an der Verpackungsmaschine eingestellt werden müssen.

Weiter zeigt Fig. 1, dass der Speicher 7 ein Datenbanksystem 9 enthält, das vorzugsweise mit einer Datenbank 10 sowie mit einer Datenbankverwaltungseinheit 11 ausgestattet ist. In der Datenbank 10 können für die jeweiligen herzustellenden Produkte bestimmte Datensätze abgelegt sein, wobei es sich dabei insbesondere um die jeweiligen Soll-Prozesswerte handelt. Ebenso gut könnte es sein, dass in der Datenbank 10 spezielle Produkteigenschaften abgelegt sind, worauf basierend die Datenbankverwaltungseinheit 11 die Soll-Prozesswerte S herleitet.

Fig. 1 zeigt auch, dass die Steuereinheit 2 funktional über eine drahtlose Datenverbindung 12 mit einem externen Netzwerk 13 verbunden sein kann. Bei dem externen Netzwerk 13 kann es sich um ein Computernetzwerk handeln, von welchem aus die Steuereinheit 2 angesteuert werden kann. Ferner kann die Steuereinheit 2 dazu konfiguriert sein, vom externen Netzwerk 13 aus angesteuert zu werden sowie basierend darauf den Speicher 7 anzusteuern, beispielsweise um die in der Datenbank 10 abgelegten Datensätze zu aktualisieren und/oder zu ergänzen. Optional wäre die Ansteuerung des Speichers 7, insbesondere der darin enthaltenen Datenbank 10, über die Steuereinheit 2 auch mittels einer an der Verpackungsmaschine 15 direkt vorgesehenen Bedienkonsole 14 möglich.

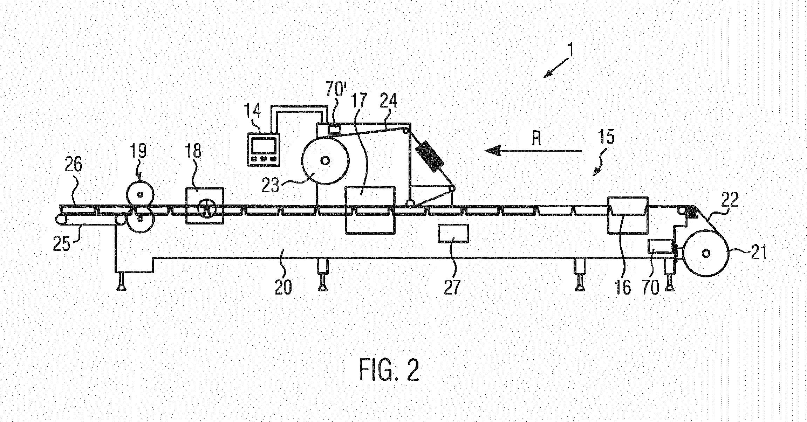

In Fig. 2 ist die erfindungsgemäße Verpackungsmaschine 1 als Tiefziehverpackungsmaschine 15 ausgebildet. Die Tiefziehverpackungsmaschine 15 weist eine Formstation 16, eine Siegelstation 17, eine Querschneidestation 18 sowie eine Längsschneidestation 19 auf, die in dieser Reihenfolge in einer Arbeitsrichtung R an einem Maschinenrahmen 20 angeordnet sind. Eingangsseitig befindet sich an dem Maschinenrahmen 20 eine Zuführrolle 21, von der eine Folienbahn 22 abgezogen wird. Im Bereich der Siegelstation 17 ist ein Materialspeicher 23 vorgesehen, von dem eine Deckelfolie 24 abgezogen wird. Ausgangsseitig ist an der Tiefziehverpackungsmaschine 15 eine Abfuhreinrichtung 25 in Form eines Transportbandes vorgesehen, mit der fertige, vereinzelte Verpackungen 26 abtransportiert werden. Ferner weist die Tiefziehverpackungsmaschine 1 eine schematisch dargestellte Folienvorschubeinrichtung 27 auf, die die Folienbahn 22 ergreift und diese pro Hauptarbeitstakt in der Arbeitsrichtung R weitertransportiert. Die Folienvorschubeinrichtung 27 ist beispielsweise als eine einseitig oder beidseitig an der Folienbahn 22 angeordnete Transportkette ausgeführt. Ferner zeigt Figur 2 ein RFID-Lesegerät 70, 70', das zum Erfassen von Informationen eines nicht gezeigten RFID-Tags, der auf der Unterfolie 22 bzw. der Deckelfolie 24 befestigt ist, konfiguriert ist. Bei den ausgelesenen Informationen handelt es sich insbesondere um Folienspezifikationen.

Das erfinderische Prinzip, welches zuvor im Zusammenhang mit der allgemein dargestellten Verpackungsmaschine 1 aus Fig. 1 beschrieben wurde, lässt sich an der Tiefziehverpackungsmaschine 15 gemäß Fig. 2 anwenden. Ohne darauf beschränkt zu sein, kommen bei der Tiefziehverpackungsmaschine 15 aus Fig. 2 insbesondere die Formstation 16 sowie die Siegelstation 17 als funktional gesteuerte Arbeitseinheiten 3, wie sie im Zusammenhang mit der Verpackungsmaschine 1 aus Fig. 1 erläutert wurden, in Frage.

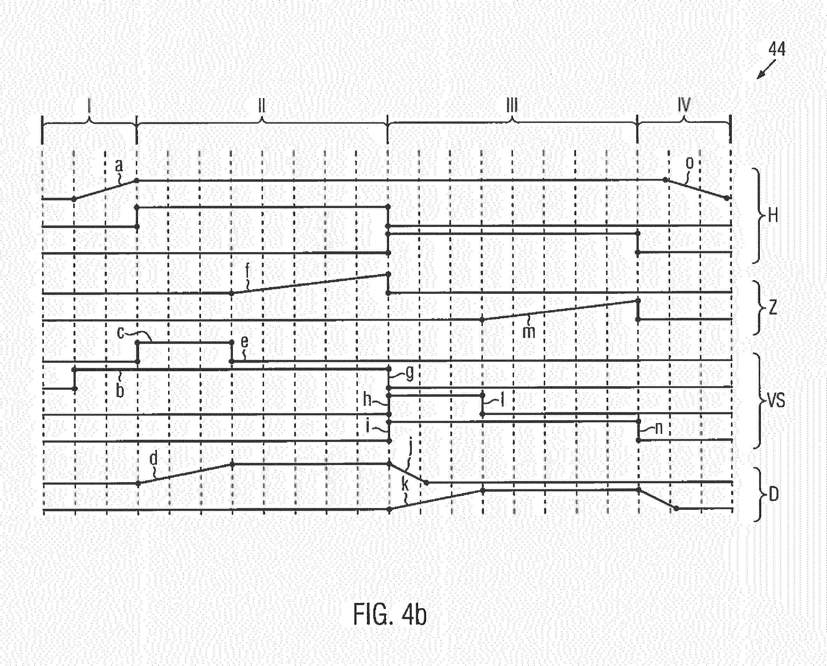

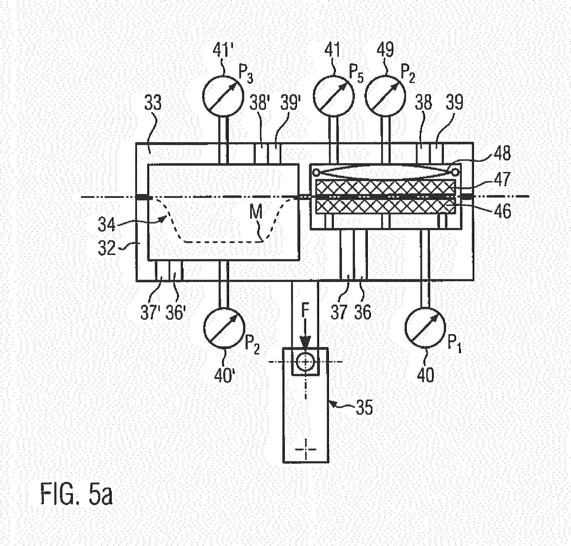

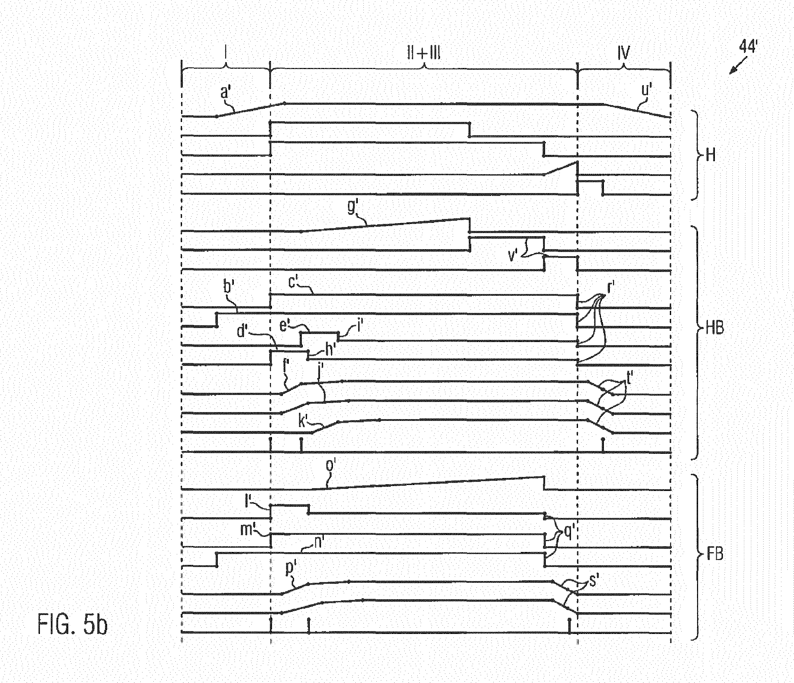

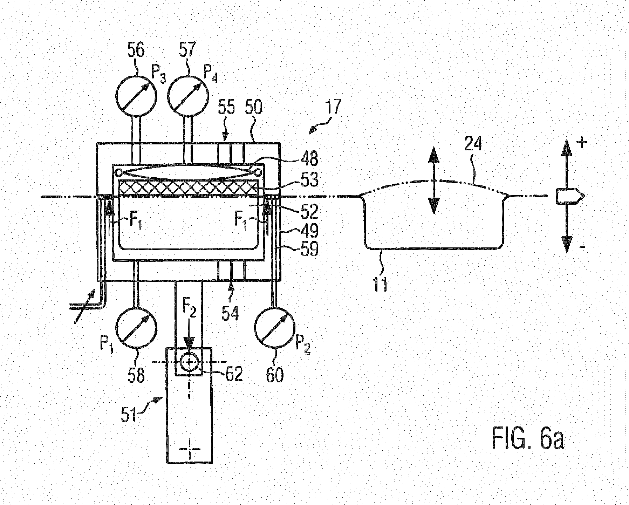

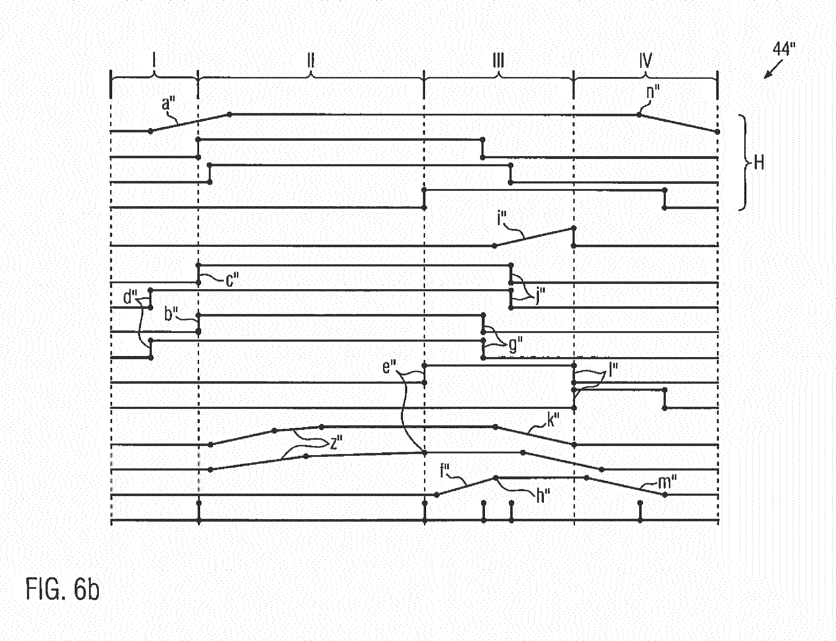

Die Formstation 16 eignet sich besonders gut für eine Prozesssteuerung gemäß der Erfindung. Dies wird im Folgenden anhand unterschiedlicher Ausführungsformen gemäß den Figuren 4a, 4b, 5a und 5b genauer erläutert. Weiter wird im Folgenden in Zusammenhang mit der Figur 6 beschrieben, wie das erfinderische Prinzip an der Siegelstation 17 anwendbar ist. Die Siegelstation 17 für sich betrachtet könnte eine Vielzahl von Arbeitseinheiten 3, beispielsweise ein Siegelwerkzeug, ein Begasungswerkzeug, ein Evakuierungswerkzeug und/oder ein separat dafür vorgesehenen Transportmittel umfassen, die jeweils gemäß selbststeuernder Programmabläufe selbst und/oder in Anpassung zueinander ablaufen. Eine ausführungsgemäße Siegelstation wird später noch in Zusammenhang mit den Figuren 6a und 6b beschrieben.

Gemäß der vorliegenden Erfindung werden daher die in der Tiefziehverpackungsmaschine 15 durchgeführten Prozesse an den jeweiligen Arbeitseinheiten 3 nicht mehr primär zeitgesteuert, sondern vielmehr selbststeuernd, prozessorientiert als Funktion von daran gemessenen und erreichten Ist-Prozesswerten I ablaufen.

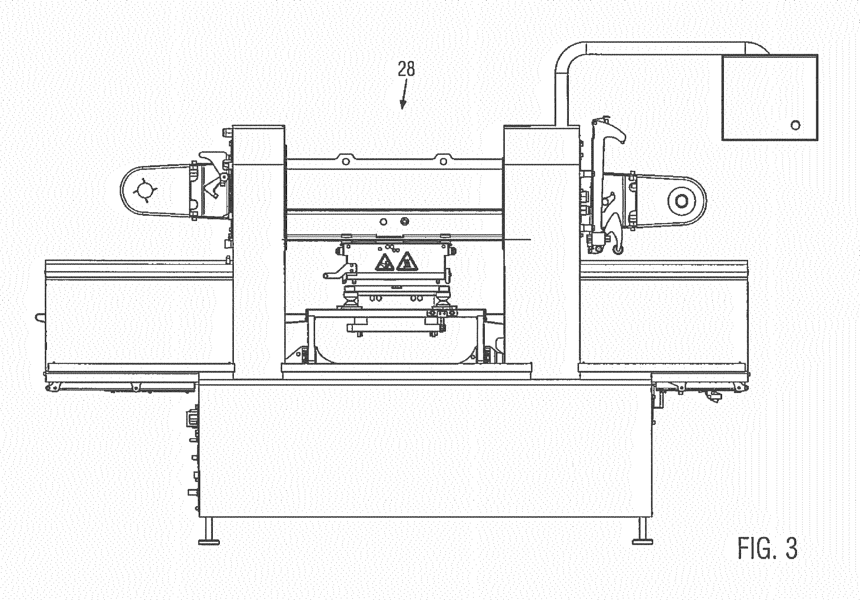

Gemäß Fig. 3 ist die erfindungsgemäße Verpackungsmaschine 1 als Traysealer 28 ausgebildet. Das zuvor im Zusammenhang mit Fig. 1 beschriebene erfinderische Prinzip der selbststeuernden Verpackungsmaschine 1 kann auch an dem Traysealer 28 angewendet werden.

Figur 4a zeigt die Formstation 16 gemäß einer Ausführungsvariante. Die Prozessweise der in Figur 4a gezeigten Formstation 16 ist in Figur 4b abgebildet.

Die Formstation 16 aus Figur 4a umfasst ein Unterteil 32 und ein Oberteil 33. Zwischen dem Unterteil 32 und dem Oberteil 33 ist eine Formkammer 34 zum Ausbilden von Verpackungsmulden M ausgebildet. Das Unterteil 32 ist mit einem Hubwerk 35 verbunden, welches das Unterteil 32 relativ zum Oberteil 33 höhenverstellbar lagert. Im Unterteil 32 sind ein unteres Druckventil 36 und ein unteres (Be-)Entlüftungsventil 37 vorgesehen. Im Oberteil 33 sind ein oberes Druckventil 38 und ein oberes (Be-)Entlüftungsventil 39 vorgesehen.

Figur 4a zeigt auch, dass im Unterteil 32 als Messeinrichtung 5 ein unterer Druckmesser 40 und im Oberteil 33 ein oberer Druckmesser 41 vorgesehen sind. Der untere und der obere Druckmesser 40, 41 sind funktional mit der Steuereinheit 2 der Verpackungsmaschine 1 verbunden.

Außerdem ist gemäß Figur 4a eine Heizplatte 42 innerhalb der Formkammer 34 angeordnet. Unterhalb der Heizplatte 42 ist ein Folienabschnitt 43 positioniert, der zwischen dem Unterteil 32 und dem Oberteil 33 eingeklemmt ist. In der Formkammer 34 wird zunächst der Folienabschnitt 43 mittels der Heizplatte 42 erhitzt und anschließend mittels geeigneter Druckerzeugung und/oder Vakuumerzeugung innerhalb der Formkammer 34 in eine gewünschte Form gebracht, um die Verpackungsmulden M herzustellen. Dies wird genauer anhand Figur 4b beschrieben.

Figur 4b zeigt ein Prozessdiagramm 44 für die erfindungsgemäße prozessgesteuerte Prozessweise der in Figur 4a abgebildeten Formstation 16. Das Prozessdiagramm 44 zeigt in vertikaler Anordnung Hauptprozesse H, Prozesszeiten Z, einen Ventilsteuerablauf VS und Druckverläufe D, die an der Formstation 16 zur Herstellung von Verpackungsmulden M prozessgesteuert zueinander ablaufen. In horizontaler Anordnung ist das Prozessdiagramm 44 in Prozessblöcke I bis IV zeitlich unterteilt.

Im Prozessblock I schließt die Formstation 16 den Folienabschnitt 43 zwischen dem Unterteil 32 und dem Oberteil 33 ein. Das Hubwerk 35 verfährt dazu das Unterteil 32 relativ zum Oberteil 33 aus einer geöffneten Stellung in eine geschlossene Stellung (Schritt a). Das untere Entlüftungsventil 37 wird in eine geschlossene Position gebracht (Schritt b).

Im Prozessblock II ist die Formstation 16 geschlossen. Der Prozessblock II umfasst das Aufheizen des eingeklemmten Folienabschnitts 43, um diesen anschließend leichter zu verformen. Im Unterteil 32 wird zunächst ein Druck erzeugt, wodurch der Folienabschnitt 43 gegen die Heizplatte 42 gedrückt wird (Schritt c). Der Druckanstieg im Unterteil 32 wird dabei mittels des unteren Druckmessers 40 überwacht (Schritt d).

Weiter wird im Prozessblock II die Druckzuführung im Unterteil 32 unterbrochen (Schritt e) und ein Beheizen der Heizplatte 43 entsprechend einer Heizzeit gestartet (Schritt f), wenn der Druck im Unterteil 32 einen Sollwert (Soll-Prozesswert) erreicht hat. Der Folienabschnitt 43 liegt nun faltenfrei an der Unterseite der Heizplatte 42 an und kann zügig erhitzt werden. Das Druckniveau bleibt dabei im Unterteil 32 während der Heizzeit erhalten.

Am Ende des Prozessblocks II bzw. zu Beginn des Prozessblocks III, d.h. nach Ablauf der Heizzeit, öffnet das untere Entlüftungsventil 37 (Schritt g). Außerdem öffnet das obere Druckventil 28 (Schritt h) und schließt das obere Entlüftungsventil 39 (Schritt i). Im Prozessblock III wird nun der erhitzte Folienabschnitt 43 geformt. Dabei wird der Folienabschnitt 43 in das Unterteil 32 gedrückt und zu einer Verpackungsmulde M ausgebildet.

Im Prozessblock III wird der im Oberteil 33 erzeugte Druckanstieg überwacht (Schritt k). Während der Druck im Unterteil 32 sinkt (Schritt j), nimmt der Druck im Oberteil 33 bis zu einem Schwellwert (Soll-Prozesswert) zu (Schritt k). Mit dem Erreichen des Schwelldrucks im Oberteil 33 wird die Druckerzeugung im Oberteil 33 unterbrochen (Schritt I) und eine Stabilisierungszeit (Abkühlzeit) gestartet (Schritt m). Während der Stabilisierungszeit wird das Druckniveau im Oberteil 33 gehalten, damit die erzeugte Verpackungsmulde M ihre Form behält. Am Ende der Stabilisierungszeit ist der Formvorgang gemäß dem Prozessblock III beendet. Die Verpackungsmulde M ist nun ausgehärtet.

Zu Beginn des Prozessblocks IV öffnet das obere Entlüftungsventil 39 (Schritt n). Dadurch sinkt das Druckniveau im Oberteil 33. Ab einem vorbestimmten Druckschwellwert (Soll-Prozesswert) im Oberteil 33 öffnet das Hubwerk 35 die Formstation 16 (Schritt o). Die geformte Verpackungsmulde M kann jetzt aus der Formkammer 34 heraus gefördert werden, wobei gleichzeitig ein neuer, zu formender Folienabschnitt 43 in die Formstation 16 nachrückt.

Je nach verwendetem Folientyp und/oder Werkzeugtyp können die im oben beschriebenen Beispiel, in den Prozessblöcken II und III erwähnten Schwelldruckwerte variieren. Die Steuereinheit 2 ist vorzugsweise dazu konfiguriert, die jeweiligen Schwelldruckwerte als Soll-Prozesswerte automatisch aus dem Speicher 7, insbesondere mittels der Datenbank 10 zu generieren. Weiter kann die Steuereinheit die Heiz- und Stabilisierungszeit (Schritte f und m) mindestens hinsichtlich des Folienmaterials und/oder des Werkzeugtypen variieren.

Figur 5a zeigt die Formstation 16 gemäß einer anderen Ausführungsvariante. Die Prozessweise der in Figur 5a gezeigten Formstation 16 ist in Figur 5b abgebildet.

Die Formstation 16 aus der Figur 5a umfasst eine separate Heizkammer 45, die als Vorheizung betrieben wird. Die Heizkammer 45 ist in Prozessrichtung gesehen vor der Formkammer 34 angeordnet. Innerhalb der Heizkammer 45 sind eine untere und eine obere Heizplatte 46, 47 vorgesehen. Zwischen diesen ist der zu erwärmende Folienabschnitt 43 durchgeführt. Oberhalb der oberen Heizplatte 47 ist ein Druckerzeuger 48, insbesondere eine aufblasbare Membran, angeordnet, der im aufgeblasenen Zustand die obere Heizplatte 47 gegen die untere Heizplatte 46 drückt.

Weiter sind die Heizkammer 45 und die Formkammer 34 jeweils mit unteren und oberen Druck- und Entlüftungsventilen 36, 36', 37, 37', 38, 38', 39, 39' ausgestattet. Die anliegenden Drücke werden in der Heizkammer 45 und der Formkammer 34 jeweils mittels unteren und oberen Druckmesser 40, 40', 41, 41' erfasst. Ein im Druckerzeuger 48 anliegender Druck wird mittels eines Druckerzeugermessers 49 ermittelt.

Figur 5a zeigt, dass die Heizkammer 45 sowie die Formkammer 34 gleichzeitig geöffnet oder geschlossen werden können, wenn das Unterteil 32 mittels des Hubwerks 35 verstellt wird. Vorstellbar wäre auch, das Unterteil 32 zweigeteilt auszubilden, wobei die jeweiligen Teile des Unterteils 32 getrennt voneinander mittels eigens dafür vorgesehener Hubwerke 35 verstellbar sind.

Figur 5b zeigt ein Prozessdiagramm für die in Figur 5a abgebildete Formstation 16. In der Doppelkammerausführung der Formstation 16 laufen das Aufheizen sowie das Formen zeitlich parallel zueinander ab. Die Prozesse aus den Prozessblöcken II und III laufen daher nicht zeitlich nacheinander ab. Zur besseren Verständlichkeit wird im Folgenden jedoch das Aufheizen und das Formen getrennt zueinander beschrieben.

Das Prozessdiagramm 44' zeigt in einem Heizfunktionsblock HB Arbeitsprozesse, die in der Heizkammer 45, und in einem Formfunktionsblock FB Arbeitsprozesse, die in der Formkammer 34 ablaufen.

Zunächst wird im Prozessblock I die Formstation 16 geschlossen (Schritt a'). Das Hubwerk 35 hebt dabei das Unterteil 32 an, wodurch die Heizkammer 45 und die Formkammer 34 schließen. Der Heizfunktionsblock HB zeigt, dass das untere Entlüftungsventil 37 geschlossen ist (Schritt b'). Außerdem zeigt der Heizfunktionsblock HB, dass durch das untere Druckventil 36 ein Vakuum in der Heizkammer 45 im Unterteil 32 erzeugt wird, um den Folienabschnitt 43 auf die untere Heizplatte 46 zu ziehen (Schritt c'). Ebenso wird ein Druck im Oberteil 33 der Heizkammer 45 angelegt, der allerdings optional ist. Dazu öffnet das obere Druckventil 38 (Schritt d'). Zusätzlich drückt der Druckerzeuger 48 auf die obere Heizplatte 47, wodurch der Folienabschnitt 43 fest zwischen der unteren und der oberen Heizplatte 46, 47 eingeklemmt wird (Schritt e'). Insbesondere können dabei zur präzisen Druckerzeugung in dem Oberteil 33 der Heizkammer 45 Proportionalregelventile verwendet werden.

Der Heizfunktionsblock HB zeigt auch, dass eine Druckreaktion innerhalb der Heizkammer 45 zeitlich verspätet relativ zu den Schaltprozessen an den Druckventilen (Schritt c' und d') einsetzt (Totzeit). Dies wird beim Steuerungsprozess der Formstation 16 berücksichtigt. Anhand einer solchen Totzeitregelung können die Ventilschaltprozesse (Schritt c' und d') vorzeitig, beispielsweise 100ms, bereits dann angesteuert werden, wenn sich die Formstation 16 noch nicht in der geschlossenen Position befindet (siehe Schritt a'). Dies geschieht beispielsweise mittels einer Wegmesseinheit für das Hubwerk 35, wobei die Wegmesseinheit ab einem bestimmten Schließweg des Hubwerks 35 ein Signal an die Steuereinheit gibt, damit diese die entsprechenden Ventile frühzeitig ansteuert.

Im Heizfunktionsblock HB werden zu Beginn die jeweiligen Drücke in der Heizkammer 45 überwacht. Sobald im Unterteil 32 vom Druckmesser 40 ein vorbestimmtes Druckniveau erfasst wird (Schritt f'), setzt die Steuereinheit 2 einen Heizvorgang an der unteren Heizplatte 46 in Gang (Schritt g'). Die Drücke im Oberteil 33 können während dem Heizvorgang beliebig geregelt werden. Insbesondere werden die Drücke im Oberteil 33 ab Erreichen eines vorbestimmte Drucks innerhalb des Oberteils 33 und/oder innerhalb des Druckerzeugers 48 auf ein vorbestimmtes Druckniveau gesenkt (Schritte h' und i').

Weiter wird gezeigt, dass das Vakuum im Unterteil 32 und der Druck im Oberteil 33 nahezu zeitgleich steigen (Schritt f' und j'). Der zusätzlich aufgebrachte Druck mittels des Druckerzeugers 48 steigt verzögert an (Schritt k'), erst nachdem das Druckniveau im Oberteil 33 und/oder das Vakuumniveau im Unterteil 32 jeweils einen vorbestimmten Wert angenommen haben.

Im Formfunktionsblock FB werden das untere und/oder obere Druckventil 36', 38' wie das untere und/oder obere Druckventil 36, 38 der Heizkammer 45 frühzeitig gemäß der Totzeitregelung frühzeitig, beispielsweise 100ms bevor die Formstation 16 geschlossen ist, angesteuert (Schritt I' und m'). Der Druckanstieg im Oberteil 33 und/oder die Vakuumbildung im Unterteil 32 werden von den Druckmessern 40', 41' überwacht. Das untere Entlüftungsventil 37' bleibt während des Formvorgangs geschlossenen (Schritt n').

Ab einem vorbestimmten Druck im Oberteil 33 und/oder Vakuum im Unterteil 32 fängt die Stabilisierungszeit an zu laufen (Schritt o'). Diese kann insbesondere auch während des Druck- und/oder Vakuumaufbaus in Gang gesetzt werden (Schritt p'). Während der Stabilisierungszeit kühlt die geformte Verpackungsmulde M ab, wodurch sie formstabil wird.

Figur 5b zeigt, dass die Heizzeit in der Heizkammer 45 kürzer ist als die Stabilisierungszeit in der Formkammer 34. Dennoch wird die Formkammer 34 früher belüftet als die Heizkammer 45 (Schritte q' und r'). Während die Formkammer 34 mit Ablauf der Stabilisierungszeit sofort eine Belüftung einleitet (Schritt q') werden die jeweiligen Ventile 36, 37, 38, 39 der Heizkammer 45 erst dann belüftet, wenn der Druck und/oder das Vakuum in der Formkammer 34 abgebaut ist (Schritt s'). Mit einer gewissen zeitlichen Verzögerung werden dann auch die Drücke in der Heizkammer 45 abgebaut (Schritt t').

Sobald das Druckniveau in der Formkammer 34 und in der Heizkammer 45 einen vorbestimmten Wert gemeinsam erreicht und/oder unterschritten haben, fährt das Hubwerk 35 nach unten und öffnet die Formstation 16 (Schritt u'). Gemäß der Figur 5b hätte die Formstation 34 bereits zu einem früheren Zeitpunkt geöffnet werden können (Schritt s'). Deshalb wäre es auch vorstellbar, voneinander getrennt funktionierende Hubwerke 35 an der Heizkammer 45 und an der Formkammer 34 einzusetzen. Dadurch ließen sich Wartezeiten reduzieren (Schritt v'). Alternativ könnte die Steuereinheit 2 das Belüften der jeweiligen Ventile an der Heizkammer 45 und an der Formkammer 34 derart zeitlich aufeinander abstimmen, dass sich innerhalb der Heizkammer 45 und der Formkammer 34 bestenfalls zeitgleich ein vorbestimmtes Druckniveau zum Öffnen der Formstation 16 einstellt. Im Falle der Figur 5b könnte beispielsweise das Belüften der Heizkammer 45 (Schritt r') früher eingeleitet werden, um den Druckabbau (Schritte t' und s') zeitlich näher zusammen zu bringen.

Figur 6a zeigt die Siegelstation 17 aus Figur 2 in vergrößerter Darstellung. Das erfindungsgemäße prozessgesteuerte Funktionsprinzip kann auch an dieser Siegelstation 17 angewendet werden.

In einer weiteren nicht näher dargestellten Variante ist ein Formstempel für die Formkammer 34 vorgesehen. Gemäß dem Stand der Technik wurde die Stempelbewegung nach unten gestartet und zeitgesteuert mit etwas Verzögerung der Formprozess gestartet. Bei der erfindungsgemäßen Variante wird die Stempelbewegung gestartet und der Formprozess auch gestartet, sobald der Formstempel eine vorgegebene Position erreicht hat.

In Figur 6a umfasst die Siegelstation 17 ein Siegelunterteil 49 und ein Siegeloberteil 50. Das Siegelunterteil 49 ist mittels eines Hubwerks 51 höhenverstellbar. Zwischen dem Siegelunterteil 49 und dem Siegeloberteil 50 ist eine Siegelkammer 52 ausgebildet. In der Siegelkammer wird die Deckelfolie 24 auf die Verpackungsmulde M gesiegelt, um darin ein (Lebensmittel-) Produkt einzuschließen. Oberhalb der Deckelfolie 24 ist eine Siegelplatte 53 positioniert. Ferner ist innerhalb des Siegeloberteils 50 ein Druckerzeuger 48, beispielsweise eine aufblasbare Membran, vorgesehen, der zum Niederdrücken der Siegelplatte 53 einsetzbar ist, um die Deckelfolie 24 auf der Verpackungsmulde M zu versiegeln.

Das Siegelunterteil 49 umfasst eine untere Ventileinheit 54 zum Erzeugen eines Vakuums und zum Belüften des Siegelunterteils 49. Das Siegeloberteil 50 umfasst eine obere Ventileinheit 55 zum Erzeugen eines Vakuums und zum Belüften des Siegeloberteils 50.

Das Siegeloberteil 50 ist mit einem oberen Druckmesser 56 ausgestattet. Der Druck im oberen Druckerzeuger 48 wird mittels eines Druckerzeugermessers 57 gemessen. Das Siegelunterteil 49 ist mit einem unteren Druckmesser 58 ausgestattet. Außerdem ist im Siegelunterteil 49 ein Vakuumerzeuger 59 ausgebildet, der in der Verpackungsmulde M ein Vakuum erzeugen kann. Den erzeugten Unterdruck in der Verpackungsmulde M misst ein Vakuummesser 60. Zum Begasen der Verpackungsmulde M mit einem beliebigen Atmosphärengas kann im Siegelunterteil 49 eine Begasungseinheit 61 vorgesehen sein.

Figur 6b zeigt die funktionalen Zusammenhänge an der Siegelstation 17 aus Figur 6a. Der Siegelprozess 44" läuft dabei prozessgesteuert ab.

Zunächst wird im Prozessblock I der Figur 6b das Siegelunterteil 49 mittels des Hubwerks 51 aus einer offen in eine geschlossene Position bewegt, in welcher das Siegelunterteil 49 mit dem Siegeloberteil 50 die Verpackungsmulde M und die darüber positionierte Deckelfolie 24 innerhalb der Siegelkammer 52 einsperrt (Schritt a").

Bevor das Siegelunterteil 49 in der geschlossenen Position ankommt, wird die untere Ventileinheit 54 zum Evakuieren des Siegelunterteils 49 angesteuert (Schritt b"). Mit geringer Verzögerung, jedoch noch vor dem Erreichen einer geschlossenen Lage des Siegelunterteils 49 wird die obere Ventileinheit 55 zum Evakuieren des Siegeloberteils 50 angesteuert (Schritt c"). Der zeitliche Vorlauf zum Ansteuern der Ventileinheiten 54, 55 dient zum Eliminieren von Totzeiten, die sich ab Ansteuerung bis zur Ventilreaktion und weiter bis zum tatsächlichen Druck- oder Vakuumaufbau summieren. Diese Totzeiten können von der Steuereinheit 2 in einem Probelauf bestimmt werden.

Im Prozessblock I bleiben zum Aufbau eines Vakuums sowohl im Siegelunterteil 49 als auch im Siegeloberteil 50 die Ventileinheiten 54, 55 für eine Belüftung geschlossen (Schritt d"). Mit gewissem zeitlichem Verzug wird zu Beginn des Prozessblocks II im Siegelunterteil 49 sowie im Siegeloberteil 50 ein Vakuum aufgebaut. Durch das erzeugte Vakuum im Siegelunterteil 49 wird zunächst die Verpackungsmulde M fixiert. Das Vakuum im Siegeloberteil 50 sorgt dafür, dass die Deckelfolie 24 faltenfrei über der Verpackungsmulde M ausgerichtet ist.

Außerdem werden die Vakuumdruckverläufe innerhalb des Siegelunterteils 49 und des Siegeloberteils 50 überwacht (Schritt z"). Im Prozessblock II wird solange im Siegelunterteil 49 und/oder im Siegeloberteil 50 ein Vakuum erzeugt, bis ein vorbestimmter Vakuumwert im Siegelunterteil 49 und/oder im Siegeloberteil 50 erfasst wird (Schritt e").

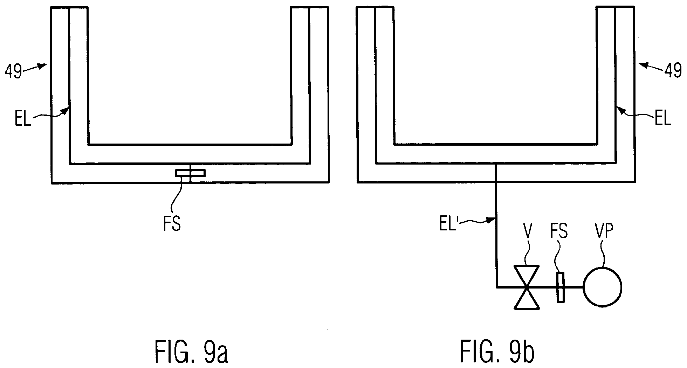

Gemäß der Erfindung ist ein in Figur 6a nicht näher dargestellter Feuchtigkeitssensor (FS) (siehe Figuren 9a und 9b) vorgesehen, um den Feuchtigkeitsgrad im Vakuum für das Produkt zu erfassen. Es kann vorkommen, dass ein vorgegebenes Endvakuum nicht erreicht werden kann, da das Produkt zu viel Feuchtigkeit erzeugt. In diesem Fall erkennt dies die Steuerung und beendet diesen Prozessschritt, obwohl das Endvakuum, nämlich der vorbestimmte Vakuumwert, noch nicht erreicht wurde.

Gemäß Figur 6b wird am Ende im Prozessblock II ein vorbestimmter Vakuumdruck im Siegeloberteil 50 erreicht, der ein Aufblähen des Druckerzeugers 48 in Gang setzt, wodurch die Siegelplatte 53 nach unten gedrückt wird und die Deckelfolie 24 auf den Rand der Verpackungsmulde M presst. Dabei baut sich im Siegelbereich ein Anpressdruck auf (Schritt f"). Dieser mechanische Anpressdruck kann mittels mindestens eines Kraftsensors 62 (siehe Figur 6a), der in dem Siegelunterteil 49 und/oder im damit verbundenen Hubwerk 51 vorgesehen ist, gemessen werden. Alternativ kann auch mittels eines Drucksensors der Druck einer Membrane ermittelt werden, die die Siegelkraft erzeugt.

Kurze Zeit später, wenn der Anpressdruck gleich einem maximalen Siegeldruck ist (Schritt h") wird eine Siegelzeit in Gang gesetzt (Schritt i"), während welcher die Deckelfolie 24 mit der Verpackungsmulde M verschweißt wird. Die Siegelzeit kann in Abhängigkeit der verwendeten Verpackungsmaterialien und/oder des verwendeten Siegelwerkzeugtyps festgelegt sein.

Während der Siegelzeit, mit zeitlicher Verzögerung zum Belüften des Siegelunterteils 49, wird auch das Siegeloberteil belüftet (Schritt j"). Als auslösendes Ereignis dafür kann insbesondere das Zurückgehen des Vakuums im Siegelunterteil 49 auf einen bestimmten Vakuumwert dienen (Schritt k").

Bis zum Ablauf der Siegelzeit im Prozessblock III bleibt die Siegelplatte 53 niedergedrückt. Sobald die Siegelzeit abgelaufen ist, wird die Siegelplatte 53 angehoben (Schritt I"). Dafür wird der Druck aus dem Druckerzeuger 48 abgelassen und überwacht (Schritt m"), wodurch die Siegelplatte 53 in eine Ausgangslage zurückbewegt werden kann. Sobald der Druck im Druckerzeuger 48 einen vorbestimmten Wert erreicht, kann im Prozessblock IV die Siegelstation 17 geöffnet werden (Schritt n"). Das Öffnen der Siegelstation 17 kann bereits dann eingeleitet werden, wenn die Siegelplatte 53 noch nicht ganz ihre Ausgangslage erreicht hat, d.h. der Druck im Druckerzeuger 48 noch nicht komplett abgebaut ist. Das Vakuum im Siegelunterteil 49 und im Siegeloberteil 50 ist bei diesem Zeitpunkt bereits vollständig durch das Belüften abgebaut.

Die zuvor beschriebenen Ausführungsformen wenden sich von einer zeitlich basierten Steuerung des Herstellungsprozesses an einer Verpackungsmaschine ab. Zeitgesteuerte Programmabläufe werden vorzugsweise beim Herstellungsprozess nicht mehr berücksichtigt. Vielmehr greift die erfindungsgemäße Verpackungsmaschine mittels der Steuereinheit 2 selbststeuernd basierend auf aktuellen erfassten Prozessparametern in den Herstellungsprozess ein, um die jeweiligen an den Arbeitseinheiten 3 durchgeführten Programmabläufe P selbst und/oder in Abstimmung zueinander selbststeuernd zu koordinieren. Dies führt zu einem wirtschaftlichen Herstellungsprozess, wobei sich die erfindungsgemäße Verpackungsmaschine 1 insbesondere durch eine hohe Verfügbarkeit zur Herstellung einer Vielzahl unterschiedlicher Produkte eignet.

Als weitere Ausführungsform ist denkbar, dass Informationen und/oder Spezifikationen von Verbrauchsmaterialien, wie die Folienbahn 22 und die Deckelfolie 24, beispielsweise mittels RFID automatisch erfasst und durch die Steuerung verarbeitet werden. Dabei können RFID Leseeinheiten 70, 70' einen auf der Folienrolle angebrachten RFID-Tag auslesen.

Form- oder Siegelwerkzeuge können vorzugsweise drahtgebunden oder drahtlos mittels RFID automatisch erkannt, identifiziert und/oder die darauf enthaltenen Informationen ausgelesen und in die Steuerung übertragen werden.

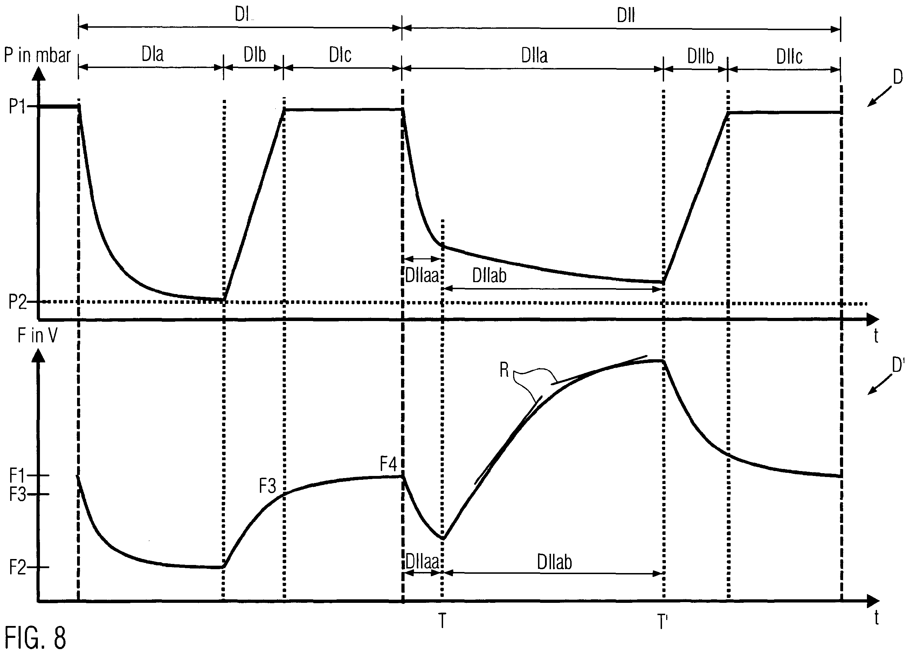

Figur 8 zeigt in einem ersten Diagramm D einen Druckverlauf eines Arbeitszyklus DI respektive eines trockenen Produkts sowie einen daran anschließenden Druckverlauf eines weiteren Arbeitszyklus DII respektive eines feuchten Produkts. Der Druckverlauf wird an der Siegelstation 17 erfasst.

Figur 8 zeigt in einem zweiten Diagramm D' einen entsprechend dem Druckverlauf in der Siegelstation 17 erfassten Feuchtigkeitsgehalt der beiden Produkte während den Arbeitszyklen DI, DII.

Im ersten und zweiten Diagramm D, D' werden der Druckverlauf sowie der dazugehörige Feuchtigkeitsgehalt eines Evakuierungsvorgangs DIa gezeigt. Im Diagramm I sinkt der Druck während des Evakuierens des trockenen Produkts von einem Startdruck P1 auf einen Sollvakuumdruck P2. Die Feuchtigkeit sinkt entsprechend dem Druckverlauf von einer anfänglichen Feuchtigkeit F1 auf eine Vakuumfeuchte F2.

Anschließend findet gemäß Figur 8 ein Begasungsvorgang Dlb statt. Dabei steigt der Druck während des Begasens des trockenen Produkts von dem Sollvakuumdruck P2 auf einen gewünschten Begasungsdruck P3, welcher vorzugsweise dem Startdruck P1 entspricht. Im Diagramm D' steigt der Feuchtigkeitsgehalt von der Vakuumfeuchte F2 auf eine Begasungsfeuchte F3.

Gemäß Figur 8 findet im Anschluss an den Begasungsvorgang Dlb ein Siegelvorgang DIc statt. Währenddessen bleibt der durch den Begasungsvorgang Dlb erzeugte Druck in der Verpackung des herzustellenden Produkts erhalten. Durch die dem Produkt für die Versiegelung zugeführte Wärme nimmt der Feuchtigkeitsgehalt innerhalb der Verpackung geringfügig zu. Am Ende des Siegelvorgangs bleibt innerhalb der Verpackung eine Restfeuchte F4, welche vorzugsweise der anfänglichen Feuchtigkeit F1 entspricht. Damit ist der Arbeitszyklus DI an der Siegelstation 17 beendet und ein neues Produkt kann an der Siegelstation 17 evakuiert, begast und versiegelt verpackt werden. Diesen Vorgang zeigt der Arbeitszyklus DII.

Im Gegensatz zum vorangehenden Arbeitszyklus DI, bei welchem ein wunschgemäß trockenes Produkt bearbeitet wurde, wird der Siegelstation 17 im Arbeitszyklus DII ein feuchtes Produkt zugeführt.

Während einer Anfangsphase Dllaa des Evakuierungsvorgangs DIIa verlaufen die jeweiligen Druckwerte sowie dazugehörigen Feuchtewerte ähnlich wie zu Beginn die Druckwerte sowie dazugehörigen Feuchtewerte aus dem Evakuierungsvorgang DIa. Auch hier wird zunächst Feuchtigkeit aus dem Verpackungsinneren gezogen, wodurch die erfasste Feuchtigkeit zunächst abnimmt. Während der Anfangsphase Dllaa ist somit die Änderungsrate der Feuchtigkeit negativ. Während beim Evakuierungsvorgang DIa des trockenen Produkts die Änderungsrate der Feuchtigkeit bis zum Erreichen des Sollvakuumdrucks P2 negativ bleibt, bzw. kleiner gleich Null ist, ändert sich während des Evakuierungsvorgangs Dlla zum Zeitpunkt T das Vorzeichen der Änderungsrate der Feuchtigkeit, wobei die Änderungsrate der Feuchtigkeit ab dem Zeitpunkt T positiv wird. Dieser Vorzeichenwechsel deutet auf das Einleiten einer Ausdampfphase Dllab hin. Während der Ausdampfphase Dllab bleibt die Änderungsrate positiv, was ein Indiz dafür ist, dass das zu verpackende Produkt ausdampft, d.h. Feuchtigkeit abgibt.

Figur 8 zeigt auch eine Regressionsgerade R. Die Regressionsgerade R wird in Figur 8 anhand von Messwerten der Feuchtigkeit während des Evakuierungsvorgangs Dlla, insbesondere anhand der Feuchtigkeitsmesswerte innerhalb der Ausdampfphase Dllab mittels der Steuereinheit 2 bestimmt. Die Änderungsrate der Feuchtigkeit kann durch die Steigung der Regressionsgeraden R definiert sein, welche sich im Verlauf der Ausdampfphase Dllab ändert.Weiter zeigt Figur 8, dass beim Evakuierungsvorgang Dlla der Druckverlauf zwar abnimmt, allerdings nicht den Sollvakuumdruck P2 erreicht. Dies liegt am feuchtigkeitsabgebenden Produkt während der Ausdampfphase Dllab.

Die Steuereinheit 2 der Verpackungsmaschine 1 ist über die jeweiligen zuvor beschriebenen Messwerte des Drucks und der Feuchtigkeit informiert und dazu in der Lage, den Evakuierungsvorgang vor Erreichen des Sollvakuumdrucks P2 abzubrechen, wenn es wie oben beschrieben zur Ausdampfphase Dllab kommt. Der Abbruch kann beispielsweise sofort ab einem vorbestimmten Schwellenwert für die positive Änderungsrate der Feuchtigkeit geschehen. In Figur 8 geschieht der Abbruch zum Zeitpunkt T'. Zum Zeitpunkt T' ist der Sollvakuumdruck P2 noch nicht erreicht. Selbst bei einer Fortführung des Evakuierungsvorgangs Dlla ist das Erreichen des Sollvakuumdrucks P2 unwahrscheinlich. Denkbar ist auch, dass der Evakuierungsvorgang erst nach Verstreichen einer zusätzlichen Verzögerungszeit nach Erreichen der Abbruchbedingung (Schwellenwert) beendet wird. Im an den abgebrochenen Evakuierungsvorgang Dlla anschließenden Schritt des Arbeitszyklus DII wird in einem Begasungsvorgang Dllb das Produkt mit einer gewünschten Atmosphäre belüftet. Das Druckniveau steigt dabei auf einen gewünschten Begasungsdruck, welcher gemäß Figur 8 dem Startdruck P1 entspricht.

Am Ende des Arbeitszyklus DII findet ein Siegelvorgang DIIc statt. Währenddessen sinkt die Feuchtigkeit auf etwa die anfängliche Feuchtigkeit F1.

Die zuvor in Zusammenhang mit Figur 8 erläuterte Vorgehensweise, die zum Abbruch des Evakuierungsvorgangs führt, eignet sich hervorragend zur Applikation an einer prozessgesteuerten Verpackungsmaschine.

Figur 9a zeigt das bereits in Figur 6a an der Siegelstation 17 verwendete Siegelunterteil 49 (im Folgenden auch: Siegelwerkzeugunterteil 49) in schematischer Darstellung. Das Siegelwerkzeugunterteil 49 umfasst eine daran integral ausgebildete Evakuierungsleitung EL, durch welche ein gewünschtes Vakuum innerhalb der Siegelstation 17 erzeugbar ist.

Gemäß Figur 9a ist ein Feuchtigkeitssensor FS in einem Abschnitt der Evakuierungsleitung EL angeordnet, in welchen mehrere Abschnitte der Evakuierungsleitung EL münden. An diesem Ort, in einem Bereich nach der Zusammenführung der einzelnen darüber verlaufenden Abschnitte der Evakuierungsleitung EL ist der Feuchtigkeitssensor FS nahe an der Siegelkammer positioniert und liefert exakte Messwerte für die Feuchtigkeit.

Alternativ gemäß Figur 9b ist der Feuchtigkeitssensor FS in einer zum Siegelwerkzeugunterteil 49 hingeführten Evakuierungsleitung EL' zwischen einem Ventil V und einer Vakuumpumpe VP angeordnet. Hier befindet sich der Feuchtigkeitssensor FS vom Siegelwerkzeugunterteil 49 derart entfernt, dass er weniger zu Verschmutzungen neigt.

Die Erfindung eignet sich hervorragend zum Einsatz an einer prozessgesteuerten Verpackungsmaschine sowie für einen prozessgesteuerten Verpackungsprozess.

## Patentansprüche

1. Verpackungsmaschine (1), die eine Steuereinheit (2), mindestens eine Messeinrichtung (5) sowie mehrere Arbeitseinheiten (3) für unterschiedliche Prozesse umfasst, wobei die Steuereinheit (2) mit den Arbeitseinheiten (3) sowie mit der Messeinrichtung (5) funktional verbunden ist,
wobei die Messeinrichtung (5) dazu konfiguriert sind, Ist-Prozesswerte (I) an einer der jeweiligen Arbeitseinheiten (3) zu erfassen und an die Steuereinheit (2) weiterzuleiten, um einen Prozessstatus an der Arbeitseinheit (3) zu überwachen,
wobei die Steuereinheit (2) dazu ausgebildet ist, durch einen Vergleich (V) der an sie von der Messeinrichtung (5) weitergeleiteten Ist-Prozesswerte (I) mit dazugehörigen Soll-Prozesswerten (S) aus einem mit ihr verbundenen Speicher (7) einen Programmablauf (P) für die jeweilige Arbeitseinheit (3) selbst und/oder bezüglich der Arbeitseinheiten (3) aufeinander abgestimmt selbststeuernd herzustellen, gemäß welchem die jeweiligen Arbeitseinheiten (3) selbst und/oder aufeinander abgestimmt funktionieren,
wobei eine der Arbeitseinheiten (3) als Siegelstation (17) ausgebildet ist,
**dadurch gekennzeichnet, dass** die Siegelstation (17) mindestens einen als die Messeinrichtung (5) ausgebildeten Feuchtigkeitssensor (FS) umfasst, der funktional mit der Steuereinheit (2) verbunden ist und der dazu ausgebildet ist, während des Programmablaufs (P) als zeitabhängige Messgröße eine Feuchtigkeit innerhalb der Siegelstation (17) zu erfassen,
wobei der Programmablauf (P) einen Evakuierungsvorgang umfasst, wobei die Steuereinheit (2) dazu ausgebildet ist, während des Evakuierungsvorgangs der Siegelstation (17) eine Änderungsrate der Feuchtigkeit zu berechnen, und
wobei die Steuereinheit (2) dazu ausgebildet ist, den an der Siegelstation (17) durchgeführten Evakuierungsvorgang vor Erreichen eines innerhalb der Siegelstation (17) sollwertigen Vakuumdrucks sofort oder nach Ablauf einer vorgegebenen Verzögerungszeit abzubrechen, wenn die Änderungsrate der Feuchtigkeit gleich oder größer als ein vorbestimmter Schwellenwert ist oder wenn eine Differenz der Änderungsrate minus dem Schwellenwert von einem negativen Wert auf einen positiven Wert und wieder zurück von einem positiven Wert auf einen negativen Wert gewechselt ist.

2. Verpackungsmaschine nach Anspruch 1, **dadurch gekennzeichnet, dass** die Steuereinheit (2) dazu ausgebildet ist, den Evakuierungsvorgang abzubrechen, wenn die Änderungsrate der Feuchtigkeit positiv ist und/oder gleich oder größer als ein vorbestimmter positiver Schwellenwert für die Änderungsrate ist.

3. Verpackungsmaschine nach Anspruch 2, **dadurch gekennzeichnet, dass** die Steuereinheit (2) dazu ausgebildet ist, einen Abbruch des Evakuierungsvorgangs als Schlechttakt abzuspeichern, wenn ein nicht sollwertiges Produktvakuum unzulässig ist.

4. Verpackungsmaschine nach Anspruch 2, **dadurch gekennzeichnet, dass** die Steuereinheit (2) dazu ausgebildet ist, einen Abbruch des Evakuierungsvorgangs als Guttakt abzuspeichern, wenn ein nicht sollwertiges Produktvakuum zulässig ist.

5. Verpackungsmaschine nach einem der vorangehenden Ansprüche, **dadurch gekennzeichnet, dass** die Siegelstation (17) ein Siegelwerkzeugunterteil (49) sowie eine daran integral ausgebildete Evakuierungsleitung (EL) umfasst, wobei der Feuchtigkeitssensor (FS) in der Evakuierungsleitung (EL) angeordnet ist.

6. Verpackungsmaschine nach Anspruch 5, **dadurch gekennzeichnet, dass** der Feuchtigkeitssensor (FS) in der Evakuierungsleitung (EL) in einem Abschnitt angeordnet ist, in welchen mehrere Abschnitte der Evakuierungsleitung (EL) münden.

7. Verpackungsmaschine nach einem der vorangehenden Ansprüche 1 bis 4, **dadurch gekennzeichnet, dass** die Siegelstation (17) ein Siegelwerkzeugunterteil (49) sowie eine mit dem Siegelwerkzeugunterteil (49) verbundene Evakuierungsleitung (EL') umfasst, wobei der Feuchtigkeitssensor (FS) in der Evakuierungsleitung (EL') angeordnet ist.

8. Verpackungsmaschine nach einem der vorangehenden Ansprüche, **dadurch gekennzeichnet, dass** die Verpackungsmaschine einen weiteren Speicher, beispielsweise einen Ringpuffer umfasst, wobei die Steuereinheit (2) dazu ausgebildet ist, intervallweise, insbesondere in einem Intervall mit einer Dauer von 1 bis 50 Millisekunden, an der Siegelstation (17) erfasste zeitabhängige Messwerte auf dem weiteren Speicher abzuspeichern.

9. Verpackungsmaschine nach einem der vorangehenden Ansprüche, **dadurch gekennzeichnet, dass** die Steuereinheit (2) dazu ausgebildet ist, anhand mehrerer absoluter Messwerte der Feuchtigkeit eine Regressionsgerade zu berechnen, welche die Änderungsrate der Feuchtigkeit bestimmt.

10. Verpackungsmaschine nach einem der vorangehenden Ansprüche, **dadurch gekennzeichnet, dass** die Steuereinheit (2) dazu ausgebildet ist, als Filterfunktion und Bedingung für den Abbruch des Evakuierungsvorgangs einen Messzeitraum von 4 bis 500 Millisekunden zu berücksichtigen, innerhalb welchem die Änderungsrate der Feuchtigkeit ausschließlich positiv ist.

11. Verpackungsmaschine nach einem der vorangehenden Ansprüche, **dadurch gekennzeichnet, dass** die Steuereinheit (2) dazu ausgebildet ist, eine Fehlermeldung auszugeben, wenn durch die Steuereinheit (2) während des Evakuierungsvorgangs keine positive Änderungsrate der Feuchtigkeit feststellbar ist und der sollwertige Vakuumdruck nicht innerhalb der Siegelstation (17) erreichbar ist.

12. Verpackungsmaschine nach einem der vorangehenden Ansprüche, **dadurch gekennzeichnet, dass** der Programmablauf (P) einen Begasungsvorgang umfasst, wobei die Steuereinheit (2) dazu ausgebildet ist, den Begasungsvorgang zu starten, wenn der Evakuierungsvorgang beendet ist.

13. Verfahren zur Selbststeuerung eines Programmablaufs (P) eines Prozesses an unterschiedlichen Arbeitseinheiten (3) einer Verpackungsmaschine (1), wobei gemäß dem Programmablauf (P) ein Prozess und/oder gemäß dem Programmablauf (P) mehrere, funktional aufeinander abgestimmte Prozesse während des Betriebs der Verpackungsmaschine (1) an den jeweiligen Arbeitseinheiten (3) durchgeführt werden, wobei an mindestens einer der jeweiligen Arbeitseinheiten (3) Ist-Prozesswerte (I) erfasst und an eine Steuereinheit (2) der Verpackungsmaschine (1) weitergeleitet werden, wobei die Steuereinheit (2) die an sie weitergeleiteten Ist-Prozesswerte (I) mit dazugehörigen Soll-Prozesswerten (S) vergleicht und daraus resultierend den jeweiligen Programmablauf (P) für die Arbeitseinheiten (3) selbst und/oder bezüglich der jeweiligen Arbeitseinheiten (3) aufeinander abgestimmt selbststeuernd herstellt und darauf basierend den Betrieb der Verpackungsmaschine (1) koordiniert,
**dadurch gekennzeichnet, dass** an einer als Siegelstation (17) ausgebildeten Arbeitseinheit (3) der Verpackungsmaschine (1) mindestens ein als Messeinrichtung (5) ausgebildeter Feuchtigkeitssensor (FS), der funktional mit der Steuereinheit (2) verbunden ist, während des Programmablaufs (P) als zeitabhängige Messgröße eine Feuchtigkeit innerhalb der Siegelstation (17) erfasst,
wobei die Steuereinheit (2) während des Programmablaufs (P) an der Siegelstation (17) zumindest abschnittsweise eine Änderungsrate der Feuchtigkeit berechnet, und
wobei die Steuereinheit (2) einen an der Siegelstation (17) durchgeführten Evakuierungsvorgang vor Erreichen eines innerhalb der Siegelstation (17) sollwertigen Vakuumdrucks sofort oder nach Ablauf einer vorgegebenen Verzögerungszeit abbricht, wenn die Änderungsrate der Feuchtigkeit gleich oder größer als ein vorbestimmter Schwellenwert ist oder wenn eine Differenz der Änderungsrate minus dem Schwellenwert von einem negativen Wert auf einen positiven Wert und wieder zurück von einem positiven Wert auf einen negativen Wert wechselt.

14. Verfahren nach Anspruch 13, **dadurch gekennzeichnet, dass** die Steuereinheit (2) den Evakuierungsvorgang abbricht, wenn die Änderungsrate der Feuchtigkeit positiv und/oder gleich oder größer als ein vorbestimmter positiver Schwellenwert für die Änderungsrate ist.

15. Verfahren nach Anspruch 13 oder 14, **dadurch gekennzeichnet, dass** die Steuereinheit (2) anhand mehrerer absoluter Messwerte der Feuchtigkeit eine Regressionsgerade berechnet, welche die Änderungsrate der Feuchtigkeit bestimmt.

## Claims

1. Packaging machine (1) comprising a control unit (2), at least one measurement device (5) as well as a plurality of work units (3) for different processes, wherein the control unit is functionally connected to the work units as well as to the measurement device (5),
wherein the measurement device (5) is configured to detect actual process values (I) at one of the respective work units (3) and forward same to the control unit (2) in order to monitor a process status at the work unit (3),
wherein the control unit (2) is designed to produce a program sequence (P) in a self-controlled manner for each work unit (3) and/or in a coordinated manner with respect to the work units (3) by comparing (V) the actual process values (I) forwarded to the control unit from each measurement device (5) with corresponding target process values (S) from a storage unit (7) connected to the control unit (2), and each work unit (3) functions themselves on the basis of the program sequence and/or in a coordinated manner according to the program sequence,
wherein one of the work units (3) is designed as a sealing station (17)
**characterizd in that**
the sealing station (17) comprises at least one moisture sensor (FS) designed as the measurement device (5) which is functionally connected to the control unit (2) and is designed to detect moisture within the sealing station (17) as a time-dependent measured variable during the program sequence (P) of the sealing station (17),
wherein the program sequence (P) comprises an evacuation process, wherein the control unit (2) is designed to calculate a rate of change in the moisture during the evacuation process of the sealing station (17), and
wherein the control unit (2) is designed to abort the evacuation process performed on the sealing station (17), based on the rate of change, before reaching a target vacuum pressure within the sealing station (17), immediately or after a specified delay time elapses, if the rate of change of the moisture is equal to or greater than a predetermined threshold value or if the difference of the rate of change minus the threshold value has changed from a negative value to a positive value and back again from a positive value to a negative value.

2. Packaging machine according to claim 1, **characterized in that** the control unit (2) is configured to abort the evacuation process, if the rate of change of moisture is positive and/or equal to or greater than a predetermined positive threshold value for the rate of change.

3. Packaging machine according to claim 2, **characterized in that** the control unit (2) is configured to store an abort of the evacuation process as a poor clock, if a non-target product vacuum is impermissible.

4. Packaging machine according to claim 2, **characterized in that** the control unit (2) is configured to store an abort of the evacuation process as a good clock, if a non-target product vacuum is permissible.

5. Packaging machine according to one of the preceding claims, **characterized in that** the sealing station (17) comprises a sealing tool lower part (49) as well as an evacuation line (EL) integrally attached thereto, wherein the moisture sensor (FS) is arranged in the evacuation line (EL).

6. Packaging machine according to claim 5, **characterized in that** the moisture sensor (FS) is arranged in the evacuation line (EL) in a section into which multiple sections of the evacuation line (EL) flow.

7. Packaging machine according to one of the preceding claims 1 to 4, **characterized in that** the sealing station (17) comprises a sealing tool lower part (49) as well as an evacuation line (EL') connected to the sealing tool lower part (49), wherein the moisture sensor (FS) is arranged in the evacuation line (EL').

8. Packaging machine according to one of the preceding claims, **characterized in that** the packaging machine comprises a further storage unit, for example a circular buffer, wherein the control unit (2) is configured to store intermittently, in particular in an intermittent with the duration of 1 to 50 milliseconds, time-dependent measured values detected at the sealing station (17) on the further storage unit.

9. Packaging machine according to one of the preceding claims, **characterized in that** the control unit (2) is configured to calculate a regression line which determines the rate of change of moisture on the basis of multiple absolute measured values of moisture.

10. Packaging machine according to one of the preceding claims, **characterized in that** the control unit (2) is configured to consider a measurement period of 4 to 500 milliseconds as filter function and condition for the abort of the evacuation process within which the rate of change of the moisture is exclusively positive.

11. Packaging machine according to one of the preceding claims, **characterized in that** the control unit (2) is configured to issue an error message, if no positive rate of change of the moisture can be detected by the control unit (2) during the evacuation process and the target vacuum pressure cannot be reached within the sealing station (17).

12. Packaging machine according to one of the preceding claims, **characterized in that** the program sequence (P) comprises a gassing process, wherein the control unit (2) is configured to start the gassing process when the evacuation process is completed.

13. Method for self-controlling a program sequence (P) of a process at different work units (3) of a packaging machine (1), wherein according to the program sequence (P), a process and/or according to the program sequence (P) several processes which are functionally coordinated to one another are carried out during the operation of the packaging machine (1) at the respective work units (3), wherein at least at one of the respective work units (3) actual process values (I) are detected and forwarded to a control unit (2) of the packaging machine (1), wherein the control unit (2) compares the forwarded actual process values (I) forwarded with associated target process values (S) and resulting therefrom, generates in a self-controlled manner the respective program sequence (P) for each of the work units (3) and/or coordinated with respect to the respective work units (3) and based thereon coordinates the operation of the packaging machine (1),
**characterized in that**
at a work unit (3) of the packaging machine (1) being configured as sealing station (17), at least one moisture sensor (FS) which is configured as measurement device (5) detects a moisture within the sealing station (17) as time-dependent measured value,
wherein the control unit (2) at least in sections calculates a rate of change in moisture at the sealing station (17) during the program sequence (P), and
wherein the control unit (2) immediately or after the expiration of a predetermined delay time aborts an evacuation process carried out at the sealing station (17) before achieving a target vacuum pressure within the sealing station, if the rate of change in moisture is equal to or greater than a predetermined threshold value or if a difference of the rate of change minus the threshold value changes from a negative value to a positive value and back again from a positive value to a negative value.

14. Method according to claim 13, **characterized in that** the control unit (2) aborts the evacuation process if the rate of change of moisture is positive and/or equal to or greater than a predetermined positive threshold value for the rate of change.

15. Method according to claim 13 or 14, **characterized in that** the control unit (2) calculates a regression line which determines the rate of change of moisture on the basis of multiple absolute measured values of moisture.

## Revendications

1. Machine d'emballage (1), qui comprend une unité de commande (2), au moins un dispositif de mesure (5), ainsi que plusieurs unités de travail (3) pour différents processus, machine d'emballage dans laquelle l'unité de commande (2) est reliée, sur le plan fonctionnel, aux unités de travail (3) ainsi qu'au dispositif de mesure (5),
dans laquelle le dispositif de mesure (5) est configuré pour relever des valeurs de processus réelles (I) au niveau de l'une des unité de travail (3) respectives, et les transmettre à l'unité de commande (2), en vue de surveiller un statut de processus au niveau de l'unité de travail (3),
dans laquelle l'unité de commande (2) est conçue pour, grâce à une comparaison (V) des valeurs de processus réelles (I), qui lui ont été transmises par le dispositif de mesure (5), avec des valeurs de processus de consigne (S) associées en provenance d'une mémoire (7) qui lui est reliée, établir de manière auto-commandée un déroulement de programme (P) pour les unités de travail (3) respectives elles-mêmes et/ou de manière mutuellement adaptée relativement aux unités de travail (3), déroulement de programme conformément auquel fonctionnent les unités de travail (3) respectives elles-mêmes et/ou de manière mutuellement adaptée,
et dans laquelle l'une des unités de travail (3) est réalisée en tant que poste de scellage (17),
**caractérisée en ce que** le poste de scellage (17) comporte au moins un capteur d'humidité (FS) réalisé en tant que ledit dispositif de mesure (5), qui est relié sur le plan fonctionnel, à l'unité de commande (2), et qui est conçu pour relever, au cours du déroulement du programme (P), une humidité en tant que grandeur de mesure fonction du temps, à l'intérieur du poste de scellage (17),
**en ce que** le déroulement de programme (P) comprend une opération de mise sous vide, l'unité de commande (2) étant conçue pour calculer un taux de variation de l'humidité pendant l'opération de mise sous vide du poste de scellage (17), et
**en ce que** l'unité de commande (2) est conçue pour interrompre immédiatement ou après écoulement d'une durée de temporisation prédéterminée, l'opération de mise sous vide effectuée dans le poste de scellage (17), avant d'atteindre une valeur de consigne de la pression de vide à l'intérieur du poste de scellage (17), lorsque le taux de variation de l'humidité est égal ou supérieur à une valeur de seuil prédéterminée, ou bien lorsqu'une différence du taux de variation moins la valeur de seuil, change d'une valeur négative à une valeur positive et à nouveau en retour d'une valeur positive à une valeur négative.

2. Machine d'emballage selon la revendication 1, **caractérisée en ce que** l'unité de commande (2) est conçue pour interrompre l'opération de mise sous vide, lorsque le taux de variation de l'humidité est positif et/ou égal ou supérieur à une valeur de seuil positive prédéterminée pour le taux de variation.

3. Machine d'emballage selon la revendication 2, **caractérisée en ce que** l'unité de commande (2) est conçue pour mémoriser une interruption de l'opération de mise sous vide en tant que cycle défectueux, lorsqu'un vide de produit, non conforme à la consigne, est non admis.

4. Machine d'emballage selon la revendication 2, **caractérisée en ce que** l'unité de commande (2) est conçue pour mémoriser une interruption de l'opération de mise sous vide en tant que cycle bon, lorsqu'un vide de produit, non conforme à la consigne, est admis.

5. Machine d'emballage selon l'une des revendications précédentes, **caractérisée en ce que** le poste de scellage (17) comprend une partie inférieure d'outillage de scellage (49), ainsi qu'une conduite de mise sous vide (EL), qui y est réalisée de manière intégrée, le capteur d'humidité (FS) étant agencé dans la conduite de mise sous vide (EL).

6. Machine d'emballage selon la revendication 5, **caractérisée en ce que** le capteur d'humidité (FS) est agencé dans la conduite de mise sous vide (EL), dans un tronçon dans lequel débouchent plusieurs tronçons de la conduite de mise sous vide (EL).

7. Machine d'emballage selon l'une des revendications 1 à 4, **caractérisée en ce que** le poste de scellage (17) comprend une partie inférieure d'outillage de scellage (49), ainsi qu'une conduite de mise sous vide (EL'), qui est reliée à la partie inférieure d'outillage de scellage (49), le capteur d'humidité (FS) étant agencé dans la conduite de mise sous vide (EL').

8. Machine d'emballage selon l'une des revendications précédentes, **caractérisée en ce que** la machine d'emballage comprend une mémoire supplémentaire, par exemple une mémoire tampon annulaire, l'unité de commande (2) étant conçue pour mémoriser dans ladite mémoire supplémentaire, par intervalles, notamment dans un intervalle d'une durée de 1 à 50 millisecondes, des valeurs de mesure, fonction du temps, relevées au niveau du poste de scellage (17).

9. Machine d'emballage selon l'une des revendications précédentes, **caractérisée en ce que** l'unité de commande (2) est conçue pour calculer, au regard de plusieurs valeurs de mesure absolues de l'humidité, une droite de régression, qui détermine le taux de variation de l'humidité.

10. Machine d'emballage selon l'une des revendications précédentes, **caractérisée en ce que** l'unité de commande (2) est conçue pour prendre en considération, en tant que fonction de filtre et de condition pour l'interruption de l'opération de mise sous vide, une durée de mesure de 4 à 500 millisecondes, pendant laquelle le taux de variation de l'humidité est exclusivement positif.

11. Machine d'emballage selon l'une des revendications précédentes, **caractérisée en ce que** l'unité de commande (2) est conçue pour délivrer un message d'erreur lorsque l'unité de commande (2) ne peut pas détecter un taux de variation de l'humidité positif pendant l'opération de mise sous vide, et que la pression de vide de consigne ne peut être atteinte à l'intérieur du poste de scellage (17).

12. Machine d'emballage selon l'une des revendications précédentes, **caractérisée en ce que** le déroulement de programme (P) comprend une opération de gazage, l'unité de commande (2) étant conçue pour démarrer l'opération de gazage, lorsque l'opération de mise sous vide est achevée.

13. Procédé pour la commande automatique d'un déroulement de programme (P) d'un processus au niveau de différentes unités de travail (3) d'une machine d'emballage (1), procédé
d'après lequel, conformément au déroulement de programme (P), un processus, et/ou conformément au déroulement de programme (P), plusieurs processus fonctionnellement adaptés les uns aux autres, sont exécutés sur les unités de travail (3) respectives pendant le fonctionnement de la machine d'emballage (1),
d'après lequel des valeurs de processus réelles (I) sont relevées au niveau d'au moins une des unités de travail (3) respectives et sont transmises à une unité de commande (2) de la machine d'emballage (1),
d'après lequel l'unité de commande (2) compare les valeurs de processus réelles (I), qui lui ont été transmises, à des valeurs de processus de consigne (S) associées, et, à partir de ces résultats, élabore de manière auto-commandée le déroulement de programme (P) respectif pour les unités de travail (3) elles-mêmes, et/ou de manière mutuellement adaptée relativement aux unités de travail (3), et, en se basant là-dessus, coordonne le fonctionnement de la machine d'emballage (1),
**caractérisé**
**en ce qu'**au niveau d'une unité de travail (3) réalisée sous forme de poste de scellage (17) de la machine d'emballage (1), au moins un capteur d'humidité (FS) réalisé en tant que dispositif de mesure (5), qui est relié sur le plan fonctionnel, à l'unité de commande (2), relève, au cours du déroulement du programme (P), une humidité, en tant que grandeur de mesure fonction du temps, à l'intérieur du poste de scellage (17),
**en ce que** l'unité de commande (2) calcule, pendant le déroulement de programme (P) au niveau du poste scellage (17), au moins par secteurs, un taux de variation de l'humidité, et
**en ce que** l'unité de commande (2) interrompt immédiatement ou après écoulement d'une durée de temporisation prédéterminée, une opération de mise sous vide effectuée au niveau du poste de scellage (17), avant d'atteindre une valeur de consigne de la pression de vide à l'intérieur du poste de scellage (17), lorsque le taux de variation de l'humidité est égal ou supérieur à une valeur de seuil prédéterminée, ou bien lorsqu'une différence du taux de variation moins la valeur de seuil, change d'une valeur négative à une valeur positive et à nouveau, en retour, d'une valeur positive à une valeur négative.

14. Procédé selon la revendication 13, **caractérisé en ce que** l'unité de commande (2) interrompt l'opération de mise sous vide, lorsque le taux de variation de l'humidité est positif et/ou égal ou supérieur à une valeur de seuil positive prédéterminée pour le taux de variation.

15. Procédé selon la revendication 13 ou la revendication 14, **caractérisé en ce que** l'unité de commande (2) calcule, au regard de plusieurs valeurs de mesure absolues de l'humidité, une droite de régression, qui détermine le taux de variation de l'humidité.
